(19) Europäisches Patentamt / European Patent Office / Office européen des brevets

(11) **EP 4 778 721 A1**

(12) **EUROPEAN PATENT APPLICATION**
published in accordance with Art. 153(4) EPC

(43) Date of publication:
**22.07.2026 Bulletin 2026/30**

(21) Application number: **24872447.8**

(22) Date of filing: **26.09.2024**

(51) International Patent Classification (IPC):
**B32B 27/32** (2006.01) **B32B 27/00** (2006.01)
**B65D 65/40** (2006.01)

(52) Cooperative Patent Classification (CPC):
**B32B 7/022; B32B 7/027; B32B 7/12; B32B 9/00;
B32B 9/04; B32B 27/00; B32B 27/32; B65D 65/40**

(86) International application number:
**PCT/JP2024/034526**

(87) International publication number:
**WO 2025/070663 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 JP 2023166474**

(71) Applicant: **Dai Nippon Printing Co., Ltd.
Tokyo 162-8001 (JP)**

(72) Inventors:
• **ISHIKAWA, Shun**
  **Tokyo 162-8001 (JP)**
• **HASEGAWA, Takayuki**
  **Tokyo 162-8001 (JP)**
• **KONO, Shinichiro**
  **Tokyo 162-8001 (JP)**
• **NAKATA, Mariko**
  **Tokyo 162-8001 (JP)**
• **SHIMIZU, Reiko**
  **Tokyo 162-8001 (JP)**
• **MORIMOTO, Taro**
  **Tokyo 162-8001 (JP)**
• **KOICHI, Chisayo**
  **Tokyo 162-8001 (JP)**
• **ONO, Yoshiyuki**
  **Tokyo 162-8001 (JP)**

(74) Representative: **Müller-Boré & Partner
Patentanwälte PartG mbB
Friedenheimer Brücke 21
80639 München (DE)**

(54) **LAMINATE, PACKAGING BAG, AND HEAT STERILIZATION POUCH**

(57)    A laminate that has heat resistance to withstand heat sterilization treatment and high openability after the heat sterilization treatment when used for a packaging bag, such as a retort pouch, is a laminate that includes a second substrate, a second adhesive layer, and a sealant layer in this order in a thickness direction, wherein the second substrate is a polypropylene stretched substrate, the sealant layer is an unstretched polypropylene film, the second substrate has a thermal shrinkage ratio of less than 2% after heating at 120°C for 15 minutes, the sealant layer has a thermal shrinkage ratio of 0% or more and 0.5% or less after heating at 120°C for 15 minutes, and the second adhesive layer has a modulus of elasticity of 15.0 MPa or more and a thickness of 0.5 $\mu$m or more and 10.0 $\mu$m or less.

*Fig. 1*

## Description

Cross-Reference to Related Applications

The present application claims the benefit of priority of Japanese Patent Application No. 2023-166474 filed on September 27, 2023, the entire contents of which are incorporated herein by reference.

Technical Field

The present invention relates to a laminate, a packaging bag, and a heat-sterilized pouch.

Background Art

A packaging bag has been composed of a laminate in which a polyester film having high strength and heat resistance, a nylon film having high impact resistance, or the like is used as a substrate, and a polyolefin film having high heat sealability is used as a sealant film. However, although a packaging bag having high recyclability has been required with the recent increase in demand for the construction of a recycling-oriented society, it has been difficult to separate each resin material in known packaging bags composed of different types of resin materials.

Thus, from the perspective of single material formation (monomaterialization) that is easy to recycle, single material formation using polyolefin has been studied. For example, Patent Literature 1 discloses a laminate used for a packaging material using a substrate layer and a sealant layer each containing a polyolefin film in place of a polyester film or a nylon film. This laminate, in which both the substrate layer and the sealant layer are composed of a polyolefin film, has improved recyclability.

Citation List

Patent Literature

PTL 1: Japanese Unexamined Patent Application Publication No. 2023-049299

Summary of Invention

Technical Problem

Incidentally, in the case of forming a packaging bag, such as a heat-sterilized pouch, a laminate used for the packaging bag is required to have heat resistance to withstand heat sterilization treatment. In a laminate disclosed in Patent Literature 1, the thermal shrinkage ratios of the substrate layer and the sealant layer satisfy a specific relationship, thereby realizing resistance to heat sterilization treatment.

Furthermore, a packaging bag, such as a heat-sterilized pouch, may be required to have easy openability such that the bag can be easily torn by hand after heat sterilization treatment. However, the fact is that studies for satisfying the required characteristics of hand tearability (easy openability) have not been sufficiently made for known single-material laminates using polyolefin films.

An object of the present disclosure is to provide a laminate that has heat resistance to withstand heat sterilization treatment and high openability after the heat sterilization treatment when used for a packaging bag, such as a heat-sterilized pouch.

Solution to Problem

A laminate according to the present disclosure is a laminate that includes a second substrate, a second adhesive layer, and a sealant layer in this order in a thickness direction, wherein the second substrate is a polypropylene stretched substrate, the sealant layer is an unstretched polypropylene film, the second substrate has a thermal shrinkage ratio of less than 2% after heating at 120°C for 15 minutes, the sealant layer has a thermal shrinkage ratio of 0% or more and 0.5% or less after heating at 120°C for 15 minutes, and the second adhesive layer has a modulus of elasticity of 15.0 MPa or more and a thickness of 0.8 $\mu$m or more and 4.5 $\mu$m or less.

Advantageous Effects of Invention

The present disclosure can provide a laminate that has heat resistance to withstand heat sterilization treatment and high openability after the heat sterilization treatment when used for a packaging bag, such as a heat-sterilized pouch.

Brief Description of Drawings

[Fig. 1] Fig. 1 is a schematic cross-sectional view of an embodiment of a laminate.
[Fig. 2] Fig. 2 is a schematic cross-sectional view of an embodiment of a laminate.
[Fig. 3] Fig. 3 is a schematic cross-sectional view of an embodiment of a laminate.
[Fig. 4] Fig. 4 is a schematic cross-sectional view of an embodiment of a laminate.
[Fig. 5] Fig. 5 is a schematic cross-sectional view of an embodiment of a laminate.
[Fig. 6] Fig. 6 is a schematic cross-sectional view of an embodiment of a laminate.
[Fig. 7] Fig. 7 is a schematic cross-sectional view of an embodiment of a laminate.
[Fig. 8] Fig. 8 is a schematic cross-sectional view of an embodiment of a laminate.
[Fig. 9] Fig. 9 is a schematic cross-sectional view of an embodiment of a laminate.
[Fig. 10] Fig. 10 is a schematic cross-sectional view of an embodiment of a laminate.
[Fig. 11] Fig. 11 is a front view of an embodiment of a packaging container.
[Fig. 12] Fig. 12 is a front view of an embodiment of a packaging container.
[Fig. 13] Fig. 13 is a schematic view of a method for measuring laminate strength.
[Fig. 14] Fig. 14 is a graph showing the measurement results of laminate strength.

Description of Embodiments

In the present description, when a plurality of upper limit candidates and a plurality of lower limit candidates are described for a certain parameter, any one upper limit candidate and any one lower limit candidate may be combined to configure the numerical range of the parameter. For example, an explanation will be given to the phrase "The parameter B is preferably A1 or more, more preferably A2 or more, still more preferably A3 or more, and is preferably A4 or less, more preferably A5 or less, still more preferably A6 or less." In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.
Embodiments of the present disclosure will be described in detail below. The present disclosure may be embodied in many different forms and should not be construed as being limited to the description of the embodiments exemplified below. In the drawings, to make the description clearer, the width, thickness, shape, and the like of each layer may be schematically illustrated compared to the embodiments; however, these are merely examples and do not limit the interpretation of the present disclosure. In the present description and each drawing, the same reference numerals and letters are given to the same elements as those already described with reference to the preceding drawings, and detailed description thereof may be omitted as appropriate.
As used herein, the term "main component" in a given layer or substrate refers to a component that constitutes more than 50% by mass, preferably 60% by mass or more, more preferably 70% by mass or more, still more preferably 80% by mass or more, of the layer or substrate.
The term "hand tearability", as used herein, refers to high openability (easy openability) in which a sealed bag can be easily torn by hand, and good hand tearability is synonymous with high openability. (As shown in Examples described later, the evaluation results of the hand tearability can be evaluated using the measurement results of trouser tear strength because the evaluation results of the hand tearability are correlated with the evaluation results of openability obtained from the measurement results of the trouser tear strength in accordance with JIS K 7128-1 (1998)))
In the following description, each component (for example, polypropylene, an $\alpha$-olefin, a resin material, an additive agent, a gas barrier resin, an adhesive resin, and an inorganic oxide) may be used alone or in combination of two or more types thereof.

[Laminate]

A laminate according to the present disclosure includes a substrate (second substrate), an adhesive layer (second adhesive layer), and a sealant layer in this order in a thickness direction (hereinafter also referred to simply as "in this order").
The laminate has only one substrate.
The substrate is a polypropylene stretched substrate. The term "polypropylene stretched substrate", as used herein, refers to a stretched substrate containing polypropylene as a main component.
The sealant layer is an unstretched polypropylene film. The unstretched polypropylene film contains polypropylene as a main component.

A laminate according to the present disclosure may include at least one barrier layer.

The barrier layer is a layer having gas barrier properties (for example, oxygen barrier properties and water vapor barrier properties, particularly oxygen barrier properties) (a surface coating layer, an inorganic oxide layer, a covering layer, a surface resin layer, or the like described later).

In a laminate according to the present disclosure, the substrate may be a barrier substrate (also referred to as a "barrier film") including at least one barrier layer.

A laminate according to the present disclosure may include only one substrate or two or more substrates.

A laminate according to the present disclosure may include only one adhesive layer or two or more adhesive layers.

A laminate according to the present disclosure preferably includes a first substrate, a first adhesive layer, a second substrate, a second adhesive layer, and a sealant layer in this order.

The first substrate is a polypropylene stretched substrate containing polypropylene as a main component.

The second substrate is a polypropylene stretched substrate containing polypropylene as a main component.

The polypropylene stretched substrate of the first substrate and the polypropylene stretched substrate of the second substrate may be the same or different.

A laminate according to the present disclosure may include one or more barrier layers.

In a laminate according to the present disclosure, the first substrate may be a barrier substrate including at least one barrier layer, or the second substrate may be a barrier substrate including at least one barrier layer.

In one embodiment of a laminate according to the present disclosure, the first substrate is a polypropylene stretched substrate, and the second substrate is a polypropylene stretched substrate. That is, the laminate includes a polypropylene stretched substrate, an optional print layer, a first adhesive layer, a polypropylene stretched substrate, a second adhesive layer, and a sealant layer in this order.

In one embodiment of a laminate according to the present disclosure, the first substrate is a barrier substrate, and the second substrate is a polypropylene stretched substrate. That is, the laminate includes a barrier substrate, an optional print layer, a first adhesive layer, a polypropylene stretched substrate, a second adhesive layer, and a sealant layer in this order.

In this embodiment, the barrier substrate is preferably disposed such that the barrier layer faces the first adhesive layer and the polypropylene stretched substrate faces the outside. Such an arrangement can further suppress, for example, degradation or the like of the barrier layer. In the present embodiment, a laminate has good gas barrier properties (for example, oxygen barrier properties and water vapor barrier properties, particularly oxygen barrier properties). A packaging bag produced using the laminate of the present embodiment has good gas barrier properties even after heat sterilization treatment, such as retort treatment or boiling treatment.

In one embodiment of a laminate according to the present disclosure, the first substrate is a polypropylene stretched substrate, and the second substrate is a barrier substrate. That is, the laminate includes a polypropylene stretched substrate, an optional print layer, a first adhesive layer, a barrier substrate, a second adhesive layer, and a sealant layer in this order.

In this embodiment, the barrier substrate may be disposed such that the barrier layer faces the second adhesive layer and the polypropylene stretched substrate faces the first adhesive layer. Alternatively, the barrier substrate may be disposed such that the barrier layer faces the first adhesive layer and the polypropylene stretched substrate faces the second adhesive layer. Such an arrangement can further suppress, for example, degradation or the like of the inorganic oxide barrier layer. In the present embodiment, a laminate has good gas barrier properties (for example, oxygen barrier properties and water vapor barrier properties, particularly oxygen barrier properties). A packaging bag produced using the laminate of the present embodiment has good gas barrier properties even after heat sterilization treatment, such as retort treatment or boiling treatment.

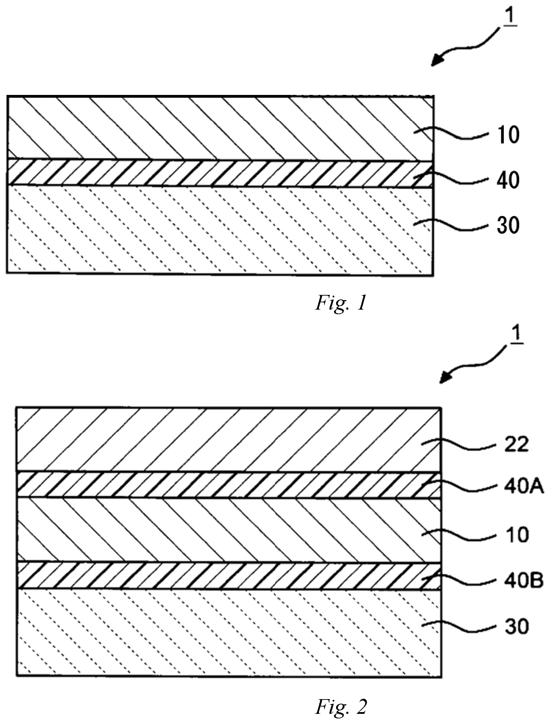

Figs. 1 to 10 are schematic cross-sectional views illustrating one embodiment of a laminate according to the present disclosure.

A laminate 1 illustrated in Fig. 1 is an example of a two-layer structure.

The laminate 1 illustrated in Fig. 1 includes a polypropylene stretched substrate 10 as a substrate, an adhesive layer 40, and a sealant layer 30 in this order.

Laminates 1 in Figs. 2 to 10 are examples of a three-layer structure.

The laminate 1 illustrated in Fig. 2 includes a polypropylene stretched substrate 22 as a first substrate, a first adhesive layer 40A, a polypropylene stretched substrate 10 as a second substrate, a second adhesive layer 40B, and the sealant layer 30 in this order.

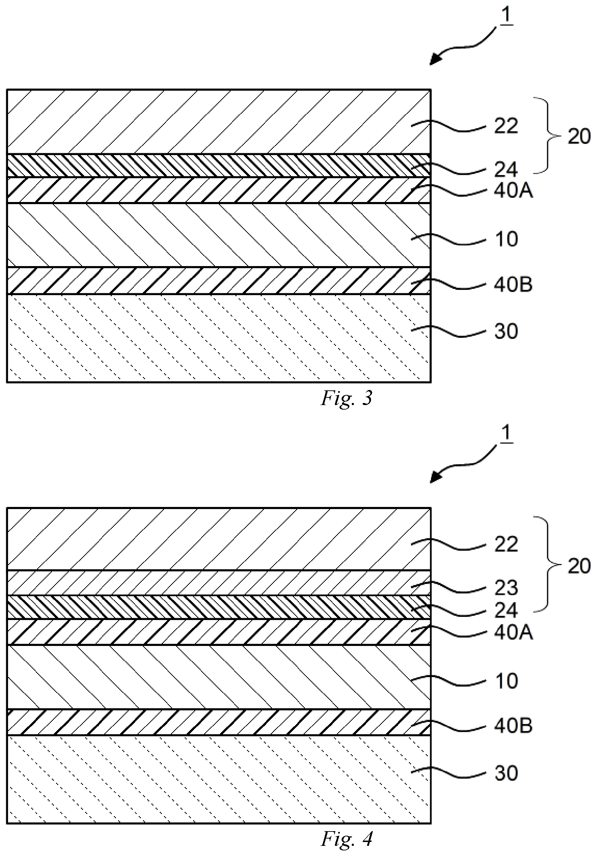

The laminate 1 illustrated in Fig. 3 includes a barrier substrate 20 as a first substrate, the adhesive layer 40A, the polypropylene stretched substrate 10 as a second substrate, the adhesive layer 40B, and the sealant layer 30 in this order. The barrier substrate 20 includes the polypropylene stretched substrate 22 and an inorganic oxide layer 24 as a barrier layer. In this example, the barrier substrate 20 is disposed such that the polypropylene stretched substrate 22 constitutes the outermost layer of the laminate 1 and the inorganic oxide layer 24 faces the adhesive layer 40A.

Fig. 4 is the same as Fig. 3 except that the barrier substrate 20 includes a surface coating layer 23 between the polypropylene stretched substrate 22 and the inorganic oxide layer 24.

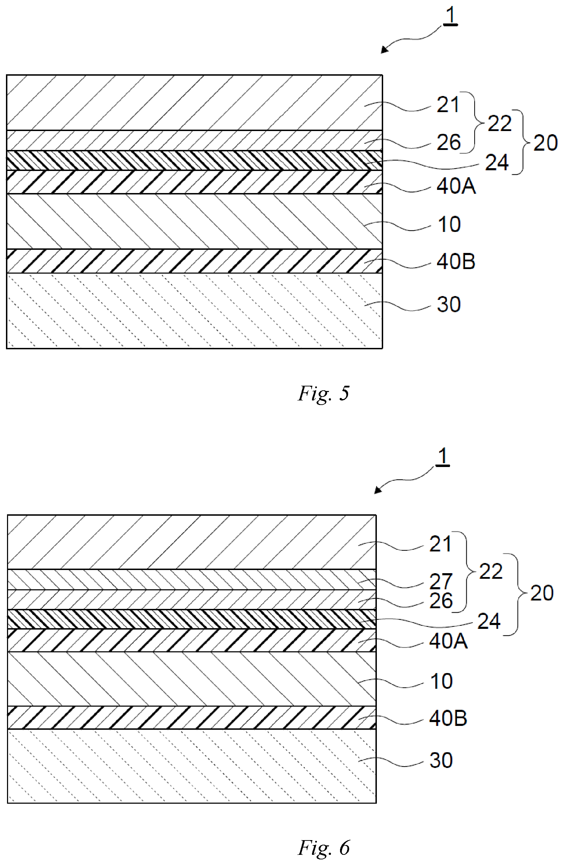

Fig. 5 is the same as Fig. 3 except that the polypropylene stretched substrate 22 includes a polypropylene layer 21 and a surface resin layer 26 as a barrier layer.

Fig. 6 is the same as Fig. 6 except that the polypropylene stretched substrate 22 has an adhesive resin layer 27 between the polypropylene layer 21 and the surface resin layer 26.

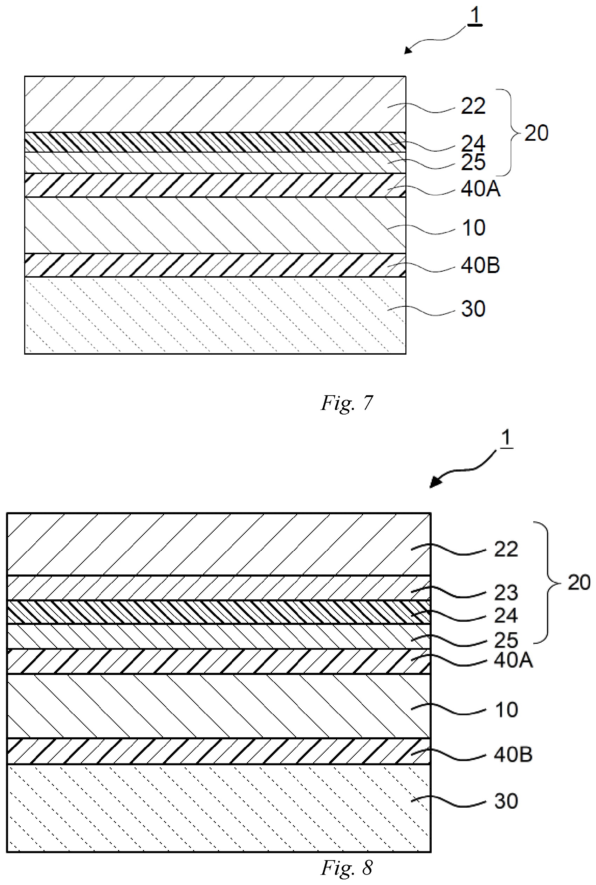

Fig. 7 is the same as Fig. 3 except that the barrier substrate 20 includes the polypropylene stretched substrate 22, the inorganic oxide layer 24, and a covering layer 25 in this order.

Fig. 8 is the same as Fig. 3 except that the barrier substrate 20 includes the polypropylene stretched substrate 22, the surface coating layer 23, the inorganic oxide layer 24, and the covering layer 25 in this order.

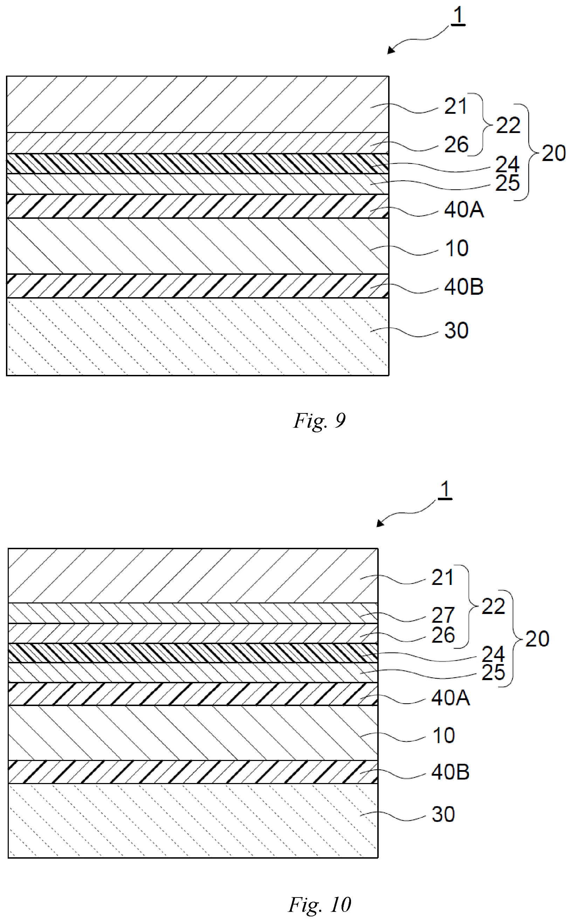

Fig. 9 is the same as Fig. 7 except that the polypropylene stretched substrate 22 includes the polypropylene layer 21 and the surface resin layer 26.

Fig. 10 is the same as Fig. 9 except that the polypropylene stretched substrate 22 includes the adhesive resin layer 27 between the polypropylene layer 21 and the surface resin layer 26.

The polypropylene content relative to the total resin material content of a laminate according to the present disclosure (hereinafter also referred to as a "monomaterialization rate") is preferably 80% by mass or more, more preferably 85% by mass or more, still more preferably 88% by mass or more, particularly preferably 90% by mass or more. A packaging bag produced using such a laminate has, for example, high recyclability. The upper limit of the polypropylene content relative to the total resin material content of a laminate according to the present disclosure may be, for example, but is not limited to, 99% by mass, 98% by mass, 97% by mass, 96% by mass, 95% by mass, or 94% by mass.

The term "monomaterialization rate", as used herein, refers to the ratio of the mass of a polypropylene-based single material to the total mass of resin material contained in the laminate. When a layer contains polypropylene as a main component (that is, more than 50% by mass), the monomaterialization rate is calculated on the assumption that the polypropylene constitutes 100% by mass of the layer.

<Polypropylene Stretched Substrate>

The polypropylene stretched substrate contains polypropylene as a main component.

The polypropylene may be any of a homopolypropylene, a random polypropylene, and a block polypropylene or may be a mixture of two or more selected from these. The polypropylene may be biomass-derived polypropylene and/or recycled polypropylene. The homopolypropylene is a polymer composed only of propylene. The random polypropylene is a random polypropylene composed of propylene and an $\alpha$-olefin or the like other than propylene. The block polypropylene is a polypropylene with a polymer block composed of propylene and a polymer block composed of at least an $\alpha$-olefin or the like other than propylene. The polymer block composed of at least an $\alpha$-olefin or the like other than propylene may be a polymer block composed of propylene and an $\alpha$-olefin other than propylene.

The $\alpha$-olefin is, for example, an $\alpha$-olefin with 2 or more and 20 or less carbon atoms other than propylene. More specifically, the $\alpha$-olefin may be ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

Among polypropylenes, a random polypropylene is preferred from the perspective of transparency, a homopolypropylene is preferred when the rigidity and heat resistance of a packaging bag are regarded as important, and a block polypropylene is preferred when the impact resistance of a packaging bag is regarded as important. In the present disclosure, among these propylenes, a homopolypropylene and a block polypropylene are more preferred from the perspective of heat resistance and impact resistance.

From the perspective of film formability and processability, the melt flow rate (MFR) of the polypropylene is preferably 0.1 g/10 minutes or more, more preferably 0.3 g/10 minutes or more, and is preferably 50 g/10 minutes or less, more preferably 30 g/10 minutes or less, for example, 0.1 g/10 minutes or more and 50 g/10 minutes or less. The MFR of the polypropylene is measured under conditions of a temperature of 230°C and a load of 2.16 kg in accordance with JIS K 7210-1: 2014, Method A.

The polypropylene content of the polypropylene stretched substrate is preferably more than 50% by mass, more preferably 60% by mass or more, still more preferably 70% by mass or more, still more preferably 80% by mass or more, particularly preferably 85% by mass or more, 90% by mass or more, or 95% by mass or more.

The polypropylene stretched substrate may contain a resin material other than polypropylene. The resin material is, for example, a polyolefin other than polypropylene, an acrylic resin, a vinyl resin, a cellulose resin, a polyamide, a polyester, or an ionomer resin. The polyolefin other than polypropylene may be polyethylene or the like.

The polypropylene stretched substrate may contain an additive agent. The additive agent is, for example, a cross-linker, an antioxidant, an anti-blocking agent, a lubricant, an ultraviolet absorber, a light stabilizer, a filler, a reinforcing agent, an antistatic agent, a pigment, or a modifying resin.

The polypropylene stretched substrate is a polypropylene substrate subjected to a stretching treatment. A laminate including the polypropylene stretched substrate has, for example, high heat resistance, impact resistance, water resistance, and dimensional stability, and is suitable as, for example, a packaging material constituting a packaging bag to be subjected to heat sterilization treatment, such as retort treatment, boiling treatment, or pasteurization treatment.

The stretching treatment may be uniaxial stretching or biaxial stretching.

The stretch ratio of stretching in the machine direction (the flow direction of the substrate, the MD direction) is preferably 2 or more, more preferably 5 or more, and preferably 15 or less, more preferably 13 or less. The stretch ratio of stretching in the transverse direction (the direction perpendicular to the MD direction, the TD direction) is preferably 2 or more, more preferably 5 or more, and preferably 15 or less, more preferably 13 or less. The stretch ratio can be 2 or more to improve the strength and heat resistance of the substrate and improve the printability to the substrate. From the perspective of the fracture limit of the substrate, the stretch ratio is preferably 15 or less.

The polypropylene stretched substrate is, for example, a biaxially stretched substrate.

The polypropylene stretched substrate may be subjected to surface treatment. This can improve, for example, the adhesion between the polypropylene stretched substrate and another layer. The surface treatment method is, for example, a physical treatment, such as a corona discharge treatment, an ozone treatment, a low-temperature plasma treatment using oxygen gas and/or nitrogen gas, or a glow discharge treatment, or a chemical treatment, such as an oxidation treatment using a chemical.

A layer having good adhesion may be provided on the surface of the polypropylene stretched substrate.

The polypropylene stretched substrate may have a monolayer structure or a multilayer structure.

The polypropylene stretched substrate preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less. A laminate including the stretched substrate with a thickness equal to or higher than the lower limit has, for example, high strength and heat resistance. A laminate including the stretched substrate with a thickness equal to or lower than the upper limit has, for example, high processability.

In the present description, the thickness of the substrate and each layer is measured as described below. A block in which a laminate is embedded in an embedding resin is prepared and is cut with a commercially available rotary microtome in a room temperature (25°C) environment to prepare a cross section of the laminate. The cross section is prepared by cutting in the thickness direction perpendicular to the main surface of the laminate. Finishing is performed with a diamond knife. The thickness of the substrate and each layer is calculated as an arithmetic mean of measurements taken at five points on the cross section observed with a scanning electron microscope (SEM, SU8000, manufactured by Hitachi, Ltd.).

In a laminate according to the present disclosure, a polypropylene stretched substrate constituting a substrate adjacent to a sealant layer via an adhesive layer (for example, a substrate in a laminate with a two-layer structure, and a second substrate in a laminate with a three-layer structure) has a thermal shrinkage ratio of less than 2% in the flow direction (MD direction) after heating at 120°C for 15 minutes (hereinafter also referred to as simply a "thermal shrinkage ratio"). The polypropylene stretched substrate preferably has a thermal shrinkage ratio of 1.5% or less, more preferably 1.4% or less, and preferably 0% or more, for example, 0% or more and less than 2%.

In a laminate according to the present disclosure, a polypropylene stretched substrate constituting a first substrate with a three-layer structure including two substrates of a first substrate and a second substrate preferably has a thermal shrinkage ratio of 3% or less, more preferably 2% or less, still more preferably 1.5% or less, and preferably 0% or more, for example, 0% or more and 3% or less.

When a laminate according to the present disclosure has the three-layer structure including two substrates and one sealant layer, the difference between the thermal shrinkage ratio of a first substrate (a substrate located far from the sealant layer) and the thermal shrinkage ratio of a second substrate (a substrate located close to the sealant layer) is 0.5 or more (that is, X1 - X2 >_ 0.5), wherein "X1" denotes the thermal shrinkage ratio of the first substrate after heating at 120°C for 15 minutes, and "X2" denotes the thermal shrinkage ratio of the second substrate after heating at 120°C for 15 minutes. Furthermore, it is preferably 1.5% or less, more preferably 1.2% or less, for example, 0.5% or more and 1.5% or less.

When the difference between the thermal shrinkage ratio "X1" of the first substrate and the thermal shrinkage ratio "X2" of the second substrate is X1 - X2 ≥ 0.5, two different films of a film with a low thermal shrinkage ratio and a film with a high thermal shrinkage ratio are used, which increases the design flexibility of the laminate in consideration of economic efficiency, and consequently a packaging bag produced using a laminate according to the present disclosure can be produced more economically and tends to have good hand tearability (tearability), that is, openability, after heat sterilization treatment.

Here, the thermal shrinkage ratio is obtained by multiplying the ratio (L0-L1)/L0 of the difference L0-L1 between the length L0 in the flow direction (MD direction) before heating and the length L1 in the flow direction after the heating to the length L0 in the flow direction before heating by 100. In the present description, the thermal shrinkage ratios of a substrate and a sealant layer are specifically measured by the following procedure.

First, a square measurement sample with a side length of 100 mm is cut out. The length L0 in the flow direction (MD direction) before heating is the length (100 mm) of this one side.

Next, an oven heated to an internal temperature of 120°C is prepared, an underlay paper is laid on a horizontal wire mesh installed in the oven, and the measurement sample is placed flat thereon and is heated for 15 minutes.

Note that the underlay paper laid under the measurement sample is for preventing thermal unevenness between a contact portion and a non-contact portion due to direct contact of the measurement sample with the wire mesh and, for example, printing paper (Tanomail original brand, model number: PPCSW-A3, basis weight: 68 g/m$^2$, thickness: 0.093 mm, high-quality paper) can be used.

The measurement sample is then taken out from the oven and is cooled to room temperature, and then the length of one side is measured. This length is the length L1 in the flow direction after heating. The thermal shrinkage ratios of the substrate and the sealant layer are then calculated from the lengths L0 and L1 in the flow direction thus obtained.

A laminate according to the present disclosure includes a polypropylene stretched substrate with a thermal shrinkage ratio equal to or lower than the upper limit as a substrate adjacent to a sealant layer with an adhesive layer interposed therebetween. A packaging bag produced using a laminate of such an embodiment tends to have less shrinkage during heating, such as a heat sterilization treatment, and have better hand tearability, that is, openability, after the heat sterilization treatment.

The thermal shrinkage ratio of a polypropylene stretched substrate can be adjusted by controlling the stereoregularity of polypropylene as disclosed in known technical literature (for example, Japanese Patent No. 6241039). More specifically, when the mesopentad fraction is 96% or more, the thermal shrinkage ratio tends to decrease, and when the mesopentad fraction is less than 96%, the thermal shrinkage ratio tends to increase.

<Barrier Substrate>

The barrier substrate includes a polypropylene stretched substrate and one or more barrier layers. The barrier layer may be a surface coating layer, an inorganic oxide layer, a covering layer, or a surface resin layer.

The barrier substrate includes, for example, a polypropylene stretched substrate and an inorganic oxide layer provided on one surface of the stretched substrate. The barrier substrate may include a surface coating layer between the polypropylene stretched substrate and the inorganic oxide layer. The barrier substrate may include a covering layer on the inorganic oxide layer. The barrier substrate may be transparent.

(Polypropylene Stretched Substrate)

The polypropylene stretched substrate in the barrier substrate may be the polypropylene stretched substrate described in the section <Polypropylene Stretched Substrate>. The polypropylene stretched substrate of the first substrate and the polypropylene stretched substrate of the second substrate may be the same or different.

The polypropylene stretched substrate in the barrier substrate may be, for example, a stretched substrate of another embodiment including a polypropylene layer, an optional adhesive resin layer, and a surface resin layer described later in this order. In this embodiment, the barrier substrate includes a stretched substrate of another embodiment and an inorganic oxide layer provided on a surface resin layer of the stretched substrate. In this embodiment, the barrier substrate includes a polypropylene layer, an optional adhesive resin layer, a surface resin layer, and an inorganic oxide layer in this order. In one embodiment, the stretched substrate of the other embodiment is a coextruded stretched resin film. The coextruded stretched resin film can be produced, for example, by forming a laminated film using a T-die method, an inflation method, or the like, and then stretching the laminated film.

The stretching treatment of the stretched substrate of the other embodiment may be uniaxial stretching or biaxial stretching.

The stretch ratio of stretching in the MD direction is preferably 2 or more, more preferably 5 or more, and is preferably 15 or less, more preferably 13 or less. The stretch ratio of stretching in the TD direction is preferably 2 or more, more preferably 5 or more, and is preferably 15 or less, more preferably 13 or less.

(Surface Coating Layer)

The barrier substrate may include a surface coating layer containing a resin material with a polar group between a polypropylene stretched substrate and an inorganic oxide layer. Such a barrier substrate has high adhesiveness to the inorganic oxide layer and also has good gas barrier properties. Such a barrier substrate includes a polypropylene stretched substrate, a surface coating layer, and an inorganic oxide layer in this order.

The polar group refers to a group with one or more heteroatoms and is, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a carboxy group, a carbonyl group, an ester group, a hydroxy group, an amino group, an amide group, and a urethane group are preferred, and a carboxy group, a hydroxy group, an amide group, and a urethane group are more preferred.

The resin material with a polar group is, for example, an ethylene-vinyl alcohol copolymer (EVOH), poly(vinyl alcohol) (PVA), a polyester, a polyethyleneimine, an acrylic resin with a hydroxy group, a polyamide, such as nylon 6, nylon 6,6, MXD nylon, or amorphous nylon, or a polyurethane. Among these, an ethylene-vinyl alcohol copolymer, poly(vinyl alcohol), an acrylic resin with a hydroxy group, a polyamide, and a polyurethane are more preferred.

The surface coating layer can be formed, for example, using an aqueous emulsion or a solvent emulsion. The aqueous emulsion is, for example, a polyamide emulsion, a polyethylene emulsion, or a polyurethane emulsion. The solvent emulsion is, for example, an acrylic resin emulsion or a polyester emulsion.

The content of the resin material with a polar group in the surface coating layer is preferably 70% by mass or more, more preferably 80% by mass or more, still more preferably 90% by mass or more.

The surface coating layer may contain the above resin material other than the resin material with a polar group.

The surface coating layer may contain the additive agent described above.

The ratio of the thickness of the surface coating layer to the total thickness of the polypropylene stretched substrate and the surface coating layer is preferably 0.08% or more, more preferably 0.2% or more, still more preferably 1% or more, and is preferably 20% or less, more preferably 15% or less, still more preferably 10% or less, still more preferably 5% or less, for example, 0.08% or more and 20% or less. The surface coating layer preferably has a thickness of 0.02 $\mu$m or more, more preferably 0.05 $\mu$m or more, still more preferably 0.1 $\mu$m or more, still more preferably 0.2 $\mu$m or more, and preferably 10 $\mu$m or less, more preferably 5 $\mu$m or less, for example, 0.02 $\mu$m or more and 10 $\mu$m or less. A ratio or a thickness equal to or higher than the lower limit can result in, for example, an inorganic oxide layer having improved adhesiveness, improved gas barrier properties, and a laminate having improved laminate strength. A ratio or a thickness equal to or lower than the upper limit can result in, for example, a barrier substrate having improved processability and a laminate having improved recyclability.

For example, a polypropylene stretched substrate and a resin substrate with a surface coating layer can be produced by forming a film of polypropylene or a resin composition containing polypropylene by a T-die method, an inflation method, or the like to produce a polypropylene substrate, stretching the substrate, applying a coating liquid for forming a surface coating layer to the stretched substrate, and drying the coating liquid.

(Polypropylene Layer, Surface Resin Layer, and Adhesive Resin Layer)

In a stretched substrate of another embodiment, the polypropylene layer contains polypropylene as a main component. The details of polypropylene are as described above, and the description thereof is omitted in this section. The polypropylene content of the polypropylene layer is preferably more than 50% by mass, more preferably 60% by mass or more, still more preferably 70% by mass or more, still more preferably 80% by mass or more, particularly preferably 85% by mass or more, 90% by mass or more, or 95% by mass or more.

The polypropylene layer may contain the above resin material other than polypropylene.

The polypropylene layer may contain the additive agent described above.

The polypropylene layer may have a monolayer structure or a multilayer structure. The polypropylene layer preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less.

In a first embodiment, the surface resin layer contains a resin material with a melting point of 180°C or more (hereinafter also referred to as a "high-melting-point resin material"). A surface resin layer containing a high-melting-point resin material can be provided between the polypropylene layer and the inorganic oxide layer, for example, to improve the adhesiveness of the inorganic oxide layer formed on the surface resin layer and suppress the deterioration of the gas barrier properties.

Furthermore, a packaging bag produced using a laminate including the surface resin layer has high laminate strength.

In the first embodiment, the surface resin layer may be provided on the polypropylene layer. That is, the surface resin layer may be adjacent to the polypropylene layer.

In the first embodiment, when a stretched substrate of another embodiment includes an adhesive resin layer between the polypropylene layer and the surface resin layer, the adhesive resin layer may be provided on the polypropylene layer, and the surface resin layer may be provided on the adhesive resin layer. That is, the adhesive resin layer may be adjacent to the polypropylene layer, and the surface resin layer may be adjacent to the adhesive resin layer.

The high-melting-point resin material preferably has a melting point of 185°C or more, more preferably 190°C or more, still more preferably 205°C or more. A melting point equal to or higher than the lower limit can result in, for example, an inorganic oxide layer having improved adhesiveness, improved gas barrier properties, and a laminate having improved laminate strength. The high-melting-point resin material preferably has a melting point of 265°C or less, more preferably 260°C or less, still more preferably 250°C or less. This can improve, for example, the film formability of the stretched substrate.

In the present description, the melting point of a high-melting-point resin material or the like is measured in accordance with JIS K 7121: 2012 (Testing methods for transition temperatures of plastics). More specifically, a melting peak temperature as a melting point is determined by measuring a DSC curve at a heating rate of 10°C/min using a differential scanning calorimetry (DSC) apparatus.

It is preferable that the high-melting-point resin material in the surface resin layer have a melting point TA, the polypropylene in the polypropylene layer have a melting point TB, and the difference between the melting point TA and the melting point TB be 20°C or more. The difference between the melting point TA and the melting point TB is preferably 80°C or less, more preferably 60°C or less.

A difference between the melting point TA and the melting point TB equal to or higher than the lower limit can result in further improved adhesion between the surface resin layer and the inorganic oxide layer and further improved gas barrier properties. This can also further improve the laminate strength of a packaging bag.

A difference between the melting point TA and the melting point TB equal to or lower than the upper limit can result in a polypropylene stretched substrate having further improved film formability.

The high-melting-point resin material preferably has a polar group. The polar group refers to a group with one or more heteroatoms and is, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a hydroxy group, an ester group, an amino group, an amide group, a carboxy group, and a carbonyl group are preferred, and an amide group is more preferred.

The high-melting-point resin material only needs to have a melting point of 180°C or more and is, for example, a polyolefin, a vinyl resin, an acrylic resin, a polyamide, a polyimide, a polyester, a cellulose resin, or an ionomer resin. For example, a resin material with a melting point of 180°C or more and with a polar group is preferred, and an ethylene-vinyl alcohol copolymer, poly(vinyl alcohol), a polyester, or a polyamide, such as nylon 6, nylon 6,6, MXD nylon, or amorphous nylon, is more preferred.

Such a resin material can be used to significantly improve the adhesiveness of the inorganic oxide layer formed on the surface resin layer and effectively suppress the deterioration of the gas barrier properties.

In the first embodiment, the high-melting-point resin material is preferably a polyamide. A polyamide can be used as the high-melting-point resin material to suppress the deterioration of the gas barrier properties even after the laminate is bent and to improve the heat resistance of the laminate. Furthermore, even after the laminate is subjected to heat sterilization treatment, such as retort treatment or boiling treatment, described later, the deterioration of the gas barrier properties can be suppressed. The high-melting-point resin material is more preferably nylon 6.

In the first embodiment, the surface resin layer preferably has a high-melting-point resin material content of 70% by mass or more, more preferably 80% by mass or more, still more preferably 90% by mass or more.

In a second embodiment, the surface resin layer contains a random polypropylene composed of propylene and an $\alpha$-olefin other than propylene. The surface resin layer containing the random polypropylene between the polypropylene layer and the adhesive layer or the second adhesive layer can improve the adhesion strength between the sealant layer and the polypropylene stretched substrate (that is, barrier substrate) and also improve the impact resistance of the laminate.

The random polypropylene is, for example, a propylene-ethylene random polypropylene or a propylene-ethylene-butene random polypropylene. Among these, any one type or a mixture of two or more types can be used as the random polypropylene.

In the propylene-ethylene random polypropylene, the content of the constitutional unit derived from ethylene is preferably 2% by mass or more, more preferably 4% by mass or more. The content is preferably 50% by mass or less, more preferably 40% by mass or less. A content in the above preferred range can result in, for example, further improved drop impact resistance. In the present disclosure, the constitutional unit content can be measured, for example, by a thermal gradient interaction chromatography (TGIC) method.

In the propylene-ethylene-butene random polypropylene, the content of the constitutional unit derived from ethylene and the constitutional unit derived from butene is preferably 2% by mass or more, more preferably 4% by mass or more. The content is preferably 50% by mass or less, more preferably 40% by mass or less.

In the second embodiment, the random polypropylene content of the surface resin layer is 50% by mass or more, preferably 70% by mass or more, more preferably 80% by mass or more, still more preferably 90% by mass or more, based on the total amount of the surface resin layer. A random polypropylene content of 50% by mass or more results in the surface resin layer having sufficient adhesion strength.

The surface resin layer may contain the above-described resin material other than the high-melting-point resin material and the random polypropylene composed of propylene and an $\alpha$-olefin other than propylene.

The surface resin layer may contain the additive agent.

The surface resin layer may be subjected to the surface treatment described above.

The ratio of the thickness of the surface resin layer to the total thickness of a stretched substrate of another embodiment including the polypropylene layer and the surface resin layer is preferably 1% or more, more preferably 1.5% or more, and is preferably 10% or less, more preferably 5% or less, for example, 1% or more and 10% or less. The surface resin layer preferably has a thickness of 0.1 μm or more, more preferably 0.2 μm or more, and preferably 5 μm or less, more preferably 4 μm or less, for example, 0.1 μm or more and 5 μm or less. A ratio or a thickness equal to or higher than the lower limit can result in, for example, an inorganic oxide layer having improved adhesiveness, improved gas barrier properties, and a laminate having improved laminate strength. A ratio or a thickness equal to or lower than the upper limit can result in, for example, a stretched substrate of another embodiment having improved film formability and processability and a laminate having improved recyclability.

A stretched substrate of another embodiment may include an adhesive resin layer between the polypropylene layer and the surface resin layer. This can improve the adhesion between the layers. The adhesive resin layer has a thickness of, for example, 1 μm or more and 15 μm or less. The adhesive resin layer with a thickness equal to or higher than the lower limit can further improve the adhesion between the polypropylene layer and the surface resin layer. The adhesive resin layer with a thickness equal to or lower than the upper limit can improve the processability of the barrier substrate.

The adhesive resin layer can be formed of, for example, an adhesive resin. The adhesive resin is, for example, a polyether, a polyester, a polyurethane, a silicone resin, an epoxy resin, a vinyl resin, a phenolic resin, a polyolefin, or an acid-modified product of a polyolefin. Among these, from the perspective of the recyclability of the laminate, a polyolefin and an acid-modified product thereof are preferred, and polypropylene and an acid-modified product thereof are more preferred. Polypropylene used for the adhesive resin layer may be a commercial product, for example, Admer series manufactured by Mitsui Chemicals, Inc.

(Inorganic Oxide Layer)

The barrier substrate includes an inorganic oxide layer. The inorganic oxide layer contains one or two or more inorganic oxides and is, for example, a vapor-deposited film of an inorganic oxide. A laminate including the barrier substrate has good gas barrier properties, more specifically, good oxygen barrier properties and water vapor barrier properties. A packaging bag produced using such a laminate can suppress the oxidative degradation of the contents filled in the packaging bag and can reduce the mass loss of the contents. The barrier substrate may include, for example, an inorganic oxide layer on a surface coating layer or may include an inorganic oxide layer on a surface resin layer.

The inorganic oxide is, for example, aluminum oxide (alumina), silicon oxide (silica), magnesium oxide, calcium oxide, zirconium oxide, titanium oxide, boron oxide, hafnium oxide, barium oxide, or silicon oxycarbide (carbon-containing silicon oxide). Among these, silica, silicon oxycarbide, and alumina are preferred.

In one embodiment, the inorganic oxide is more preferably silica because aging treatment after the formation of the inorganic oxide layer is not required. In one embodiment, the inorganic oxide is more preferably carbon-containing silicon oxide because the deterioration of the gas barrier properties can be suppressed even when the laminate is bent.

The inorganic oxide layer preferably has a thickness of 1 nm or more, more preferably 5 nm or more, still more preferably 10 nm or more, and preferably 150 nm or less, more preferably 60 nm or less, still more preferably 40 nm or less, for example, 1 nm or more and 150 nm or less. A laminate including an inorganic oxide layer with a thickness equal to or higher than the lower limit has, for example, good oxygen barrier properties and water vapor barrier properties. For example, a laminate including an inorganic oxide layer with a thickness equal to or lower than the upper limit can suppress the occurrence of a crack in the inorganic oxide layer and has high recyclability.

The surface of the inorganic oxide layer may be subjected to the surface treatment described above.

A method for forming an inorganic oxide layer, particularly an inorganic oxide deposited film, is, for example, a physical vapor deposition method (PVD method), such as a vacuum deposition method, a sputtering method, or an ion plating method, or a chemical vapor deposition method (CVD method), such as a plasma chemical vapor deposition method, a thermal chemical vapor deposition method, or a photochemical vapor deposition method.

The inorganic oxide layer may be a single layer formed by a single vapor deposition step or multiple layers formed by a plurality of vapor deposition steps. When the inorganic oxide layer has multiple layers, each layer may be composed of the same inorganic oxide or different inorganic oxides. Each layer may be formed by the same method or different methods.

The inorganic oxide layer is preferably a vapor-deposited film formed by a CVD method, more preferably a carbon-containing silicon oxide deposited film formed by a CVD method. A laminate including such an inorganic oxide layer has, for example, high bending resistance.

The carbon-containing silicon oxide deposited film contains silicon, oxygen, and carbon.

In one embodiment of the carbon-containing silicon oxide deposited film, the carbon content C is preferably 3% or more, more preferably 5% or more, still more preferably 10% or more, and is preferably 50% or less, more preferably 40% or less, still more preferably 35% or less, for example, 3% or more and 50% or less, relative to the total (100%) of the three elements of silicon, oxygen, and carbon. A carbon content C in such a range can result in, for example, a laminate with less deterioration of the gas barrier properties even when bent.

In the present description, the ratio of each element is on a molar basis.

In one embodiment of the carbon-containing silicon oxide deposited film, the silicon content Si is preferably 1% or more, more preferably 3% or more, still more preferably 8% or more, and is preferably 45% or less, more preferably 38% or less, still more preferably 33% or less, for example, 1% or more and 45% or less, relative to the total (100%) of the three elements of silicon, oxygen, and carbon. The oxygen content O is preferably 10% or more, more preferably 20% or more, still more preferably 25% or more, and is preferably 70% or less, more preferably 65% or less, still more preferably 60% or less, for example, 10% or more and 70% or less, relative to the total (100%) of the three elements of silicon, oxygen, and carbon. A silicon content Si and an oxygen content O in such a range can result in, for example, a laminate with much less deterioration of the gas barrier properties even when bent.

In one embodiment of the carbon-containing silicon oxide deposited film, the oxygen content O is preferably higher than the carbon content C, and the silicon content Si is preferably lower than the carbon content C. The oxygen content O is preferably higher than the silicon content Si; that is, the oxygen content O, the carbon content C, and the silicon content Si preferably decrease in this order. This can further suppress, for example, the deterioration of the gas barrier properties even when the laminate is bent.

The carbon content C, the silicon content Si, and the oxygen content O of the carbon-containing silicon oxide deposited film are measured by X-ray photoelectron spectroscopy (XPS) using narrow scan analysis under the following measurement conditions.

(Measurement Conditions)

Apparatus: "ESCA-3400" (manufactured by Kratos)

[1] Spectrum Measurement Conditions

Incident X-ray: MgK$\alpha$ (non-monochromatic X-ray, hv = 1253.6 eV)

X-ray output: 150 W (10 kV x 15 mA)

Measurement region: approximately 6 mmΦ

Photoelectron acceptance angle: 90 degrees

[2] Ion Sputtering Conditions

Ionic species: Ar+

Pressure of Ar gas introduction: 2.0 x $10^{-2}$ Pa

Acceleration voltage: 0.2 (kV)

Emission current: 20 (mA)

Ion sputtering time: 30 seconds to measure a spectrum

(Covering Layer)

The barrier substrate may further include a covering layer on the inorganic oxide layer. That is, the barrier substrate may further include a covering layer on the surface of the inorganic oxide layer opposite the surface facing the polypropylene stretched substrate. A laminate including such a barrier substrate has, for example, good oxygen barrier properties and water vapor barrier properties.

In one embodiment, the covering layer contains a resin component. The resin component is, for example, a polyolefin, such as polyethylene, polypropylene, polybutene, or polymethylpentene, a vinyl resin, an acrylic resin, a polyester, a urethane resin, a melamine resin, or an epoxy resin. The resin component content of the covering layer is preferably more than 50% by mass, more preferably 75% by mass or more, and is preferably 95% by mass or less, more preferably 90% by mass or less, for example, more than 50% by mass and 95% by mass or less.

The covering layer may contain the additive agent described above.

The covering layer preferably has a thickness of 0.01 $\mu$m or more, more preferably 0.05 $\mu$m or more, still more preferably 0.1 $\mu$m or more, and preferably 5 $\mu$m or less, more preferably 3 $\mu$m or less, still more preferably 1 $\mu$m or less, for

example, 0.01 μm or more and 5 μm or less. Such a covering layer has, for example, high scratch resistance.

The covering layer can be formed, for example, by applying a coating liquid for a covering layer to the surface of the inorganic oxide layer and drying the coating liquid. The coating liquid for a covering layer can be prepared, for example, by mixing the above-described resin component, an additive agent as required, and a solvent. Details of these components are as described above. A method for applying the coating liquid for a covering layer may be a known coating method. A method for drying the applied coating liquid for a covering layer is, for example, a method of applying heat, such as hot-air drying, hot-roll drying, or infrared irradiation. The drying temperature may be 50°C or more and may be 150°C or less.

In one embodiment, the covering layer may be a barrier coating layer containing a gas barrier resin. The gas barrier resin is, for example, an ethylene-vinyl alcohol copolymer, poly(vinyl alcohol), a polyacrylonitrile, a polyester, a polyamide, such as nylon 6, nylon 6,6, or poly(m-xylylene adipamide), a polyurethane, or an acrylic resin. Among these, poly(vinyl alcohol) is preferred from the perspective of oxygen barrier properties and water vapor barrier properties.

Furthermore, poly(vinyl alcohol) in the barrier coating layer can effectively prevent the occurrence of a crack in the inorganic oxide layer.

The gas barrier resin content of the barrier coating layer is preferably 50% by mass or more, more preferably 60% by mass or more, still more preferably 70% by mass or more, still more preferably 75% by mass or more, and is preferably 95% by mass or less, more preferably 90% by mass or less, for example, 50% by mass or more and 90% by mass or less. Such a barrier coating layer has, for example, good gas barrier properties.

The barrier coating layer may contain the additive agent described above.

The barrier coating layer containing the gas barrier resin preferably has a thickness of 0.01 μm or more, more preferably 0.1 μm or more, and preferably 10 μm or less, more preferably 5 μm or less, for example, 0.01 μm or more and 10 μm or less. A barrier substrate including the barrier coating layer with a thickness equal to or higher than the lower limit has, for example, good gas barrier properties. A barrier substrate including the barrier coating layer with a thickness equal to or lower than the upper limit can improve, for example, the processability and recyclability of the laminate.

Furthermore, the barrier coating layer with a thickness in the above range does not impair the recyclability even when the gas barrier resin is a resin material different from polypropylene.

The barrier coating layer can be formed, for example, by dissolving or dispersing a material, such as a gas barrier resin, in water or an appropriate organic solvent, applying the resulting coating liquid to the surface of the inorganic oxide layer, and drying the coating liquid. The barrier coating layer can also be formed, for example, by applying and drying a commercially available barrier coating agent.

In one embodiment, the covering layer may be a gas barrier coating film formed by subjecting a composition containing a metal alkoxide and a water-soluble polymer to a polycondensation treatment by a sol-gel method in the presence of a sol-gel method catalyst, water, an organic solvent, and the like. A barrier substrate including a gas barrier coating film on an inorganic oxide layer has, for example, good gas barrier properties. The gas barrier coating film contains a hydrolytic polycondensate produced by hydrolysis and polycondensation of the metal alkoxide or the like by a sol-gel method. Such a gas barrier coating film on the inorganic oxide layer can effectively suppress, for example, the occurrence of a crack in the inorganic oxide layer.

The metal alkoxide is represented, for example, by the formula (1):

$$R^1{}_n M(OR^2)_m \qquad (1)$$

In the formula (1), $R^1$ and $R^2$ each independently denote an organic group with 1 or more and 8 or less carbon atoms, M denotes a metal atom, n denotes an integer of 0 or more, m denotes an integer of 1 or more, and n + m denotes the valence of M. The organic group in $R^1$ and $R^2$ is, for example, an alkyl group with 1 or more and 8 or less carbon atoms, such as a methyl group, an ethyl group, a n-propyl group, an isopropyl group, a n-butyl group, an isobutyl group, a sec-butyl group, a t-butyl group, a n-hexyl group, or a n-octyl group. The metal atom M is, for example, silicon, zirconium, titanium, or aluminum. The metal alkoxide is, for example, an alkoxysilane, such as tetramethoxysilane, tetraethoxysilane, tetrapropoxysilane, or tetrabutoxysilane.

The water-soluble polymer is, for example, a polymer with a hydroxy group, such as poly(vinyl alcohol) or an ethylene-vinyl alcohol copolymer. Depending on desired physical properties, such as oxygen barrier properties, water vapor barrier properties, water resistance, or weather resistance, poly(vinyl alcohol) and an ethylene-vinyl alcohol copolymer may be used alone or in combination, or a gas barrier coating film formed using poly(vinyl alcohol) and a gas barrier coating film formed using an ethylene-vinyl alcohol copolymer may be laminated. The amount of the water-soluble polymer to be used is preferably 3 parts by mass or more, more preferably 5 parts by mass or more, and preferably 500 parts by mass or less, per 100 parts by mass of the metal alkoxide. The gas barrier coating film with a water-soluble polymer content equal to or higher than the lower limit can further improve the oxygen barrier properties and water vapor barrier properties of the laminate. The gas barrier coating film with a water-soluble polymer content equal to or lower than the upper limit can improve the film formability of the gas barrier coating film.

The metal alkoxide may be used together with a silane coupling agent. The silane coupling agent can be a known organoalkoxysilane having an organic reactive group, preferably an organoalkoxysilane having an epoxy group, for example, γ-glycidoxypropyltrimethoxysilane, γ-glycidoxypropylmethyldiethoxysilane, or β-(3,4-epoxycyclohexyl)ethyltrimethoxysilane. The amount of the silane coupling agent to be used is preferably 1 part by mass or more and 20 parts by mass or less per 100 parts by mass of the metal alkoxide.

In the gas barrier coating film, the ratio of the metal alkoxide to the water-soluble polymer (metal alkoxide/water-soluble polymer) is preferably 4.5 or less, more preferably 3.5 or less, and is preferably 1.0 or more, more preferably 1.7 or more, for example, 1.0 or more and 4.5 or less, on a mass basis.

When the ratio of the metal alkoxide to the water-soluble polymer is equal to or lower than the upper limit, it is possible to suppress the deterioration of the gas barrier properties even after the laminate is bent.

When the ratio of the metal alkoxide to the water-soluble polymer is equal to or higher than the lower limit, the heat resistance of the laminate can be improved. Furthermore, even after the laminate is subjected to heat sterilization treatment, such as retort treatment or boiling treatment, described later, the deterioration of the gas barrier properties can be suppressed.

The above ratio is a solid content ratio.

The ratio of silicon atoms to carbon atoms (Si/C) on the surface of the gas barrier coating film measured by X-ray photoelectron spectroscopy (XPS) is preferably 1.60 or less, more preferably 1.35 or less, and is preferably 0.50 or more, more preferably 0.90 or more.

When the ratio of silicon atoms to carbon atoms is equal to or lower than the upper limit, it is possible to suppress the deterioration of the gas barrier properties even after the laminate is bent.

When the ratio of silicon atoms to carbon atoms is equal to or higher than the lower limit, the heat resistance of the laminate can be improved. Furthermore, even after the laminate is subjected to heat sterilization treatment, such as retort treatment or boiling treatment, described later, the deterioration of the gas barrier properties can be suppressed.

A ratio of silicon atoms to carbon atoms in such a range can be achieved by appropriately adjusting the ratio of the metal alkoxide to the water-soluble polymer.

In the present description, the ratio of silicon atoms to carbon atoms is on a molar basis.

The ratio of silicon atoms to carbon atoms in X-ray photoelectron spectroscopy (XPS) can be measured by narrow scan analysis under the following measurement conditions.

(Measurement Conditions)

Apparatus: "ESCA-3400" (manufactured by Kratos)

[1] Spectrum Measurement Conditions

Incident X-ray: MgKα (monochromated X-ray, hv = 1253.6 eV)

X-ray output: 150 W (10 kV x 15 mA)

X-ray scan area (measurement region): approximately 6 mmΦ

Photoelectron acceptance angle: 90 degrees

[2] Ion Sputtering Conditions

Ionic species: $Ar^+$

Acceleration voltage: 0.2 (kV)

Emission current: 20 (mA)

Etch range: 10 mmΦ

Ion sputtering time: 30 seconds + 30 seconds + 60 seconds (120 seconds in total) to measure a spectrum

The gas barrier composition may preferably contain water in an amount of 0.1 mol or more, more preferably 0.5 mol or more, still more preferably 0.8 mol or more, and preferably 100 mol or less, more preferably 60 mol or less, still more preferably 2 mol or less, per mole of the metal alkoxide. A water content equal to or higher than the lower limit can result in, for example, a laminate having improved oxygen barrier properties and water vapor barrier properties. A water content equal to or lower than the upper limit can result in, for example, a rapid hydrolysis reaction.

The gas barrier composition may contain an organic solvent. The organic solvent is, for example, methyl alcohol, ethyl alcohol, n-propyl alcohol, isopropyl alcohol, or n-butyl alcohol.

The sol-gel method catalyst is preferably an acid or an amine compound.

The acid is, for example, a mineral acid, such as sulfuric acid, hydrochloric acid, or nitric acid, or an organic acid, such as acetic acid or tartaric acid. The amount of the acid to be used is preferably 0.001 mol or more and 0.05 mol or less per total mole of alkoxide moieties of the metal alkoxide and the silane coupling agent (for example, silicate moiety). When the amount of the acid to be used is equal to or higher than the lower limit, the catalytic effect can be improved. When the amount of the acid to be used is equal to or lower than the upper limit, a gas barrier coating film with a uniform thickness can be formed.

The amine compound is preferably a tertiary amine that is substantially insoluble in water and soluble in an organic solvent, for example, N,N-dimethylbenzylamine, tripropylamine, tributylamine, or tripentylamine. Among these, N,N-dimethylbenzylamine is preferred.

The amount of the amine compound to be used is preferably 0.01 parts by mass or more, more preferably 0.03 parts by mass or more, and is preferably 1.0 part by mass or less, more preferably 0.3 parts by mass or less, per 100 parts by mass of the metal alkoxide and the silane coupling agent in total. When the amount of the amine compound to be used is equal to or higher than the lower limit, the catalytic effect thereof can be improved. When the amount of the amine compound to be used is equal to or lower than the upper limit, a gas barrier coating film with a uniform thickness can be formed.

A method for applying the gas barrier composition is, for example, roll coating with a gravure roll coater or the like, spray coating, spin coating, dipping, brushing, bar coating, or application means, such as an applicator.

One embodiment of a method for forming a gas barrier coating film will be described below

A gas barrier composition is prepared by mixing a metal alkoxide, a water-soluble polymer, a sol-gel method catalyst, water, an organic solvent, a silane coupling agent as required, and the like. A polycondensation reaction proceeds gradually in the composition. The composition is applied to the inorganic oxide layer and is dried in the usual manner. The drying further promotes the polycondensation of the metal alkoxide and the water-soluble polymer (and the silane coupling agent when the composition contains the silane coupling agent), thereby forming a layer of a composite polymer. This operation may be repeated to stack a plurality of composite polymer layers. For example, the applied composition is preferably heated at a temperature of 20°C or more, more preferably 50°C or more, still more preferably 70°C or more, and preferably 250°C or less, more preferably 220°C or less, still more preferably 150°C or less, still more preferably 120°C or less, particularly preferably 100°C or less, for 1 second or more and 10 minutes or less. Thus, a gas barrier coating film can be formed.

The gas barrier coating film preferably has a thickness of 0.01 $\mu$m or more, more preferably 0.1 $\mu$m or more, and preferably 100 $\mu$m or less, more preferably 10 $\mu$m or less, still more preferably 2 $\mu$m or less, still more preferably 1 $\mu$m or less, particularly preferably 0.5 $\mu$m or less, for example, 0.01 $\mu$m or more and 100 $\mu$m or less. For example, this can improve the gas barrier properties, suppress the occurrence of a crack in the inorganic oxide layer, and improve the recyclability of a packaging bag.

<Print Layer>

A laminate according to the present disclosure may have a print layer on the surface of a substrate, such as a first substrate or a second substrate. An image formed on the print layer is, but not limited to, a character, a pattern, a symbol, a combination thereof, or the like. The print layer may be formed using a biomass-derived ink. This can further reduce the environmental load.

A method for forming a print layer is, for example, a known printing method, such as a gravure printing method, an offset printing method, or a flexographic printing method. Among these, the flexographic printing method is preferred from the perspective of environmental load reduction.

The print layer has a thickness of, for example, 0.5 $\mu$m or more and 3 $\mu$m or less.

<Adhesive Layer>

In one embodiment, a laminate according to the present disclosure includes an adhesive layer between a substrate and a sealant layer.

In one embodiment, a laminate according to the present disclosure includes a first adhesive layer between the first substrate and the second substrate, and a second adhesive layer between the second substrate and the sealant layer. Such a laminate has, for example, high laminate strength between the substrate and the sealant layer, between the first substrate and the second substrate, and between the second substrate and the sealant layer.

In a laminate according to the present disclosure, an adhesive layer located between a sealant layer and a substrate adjacent to the sealant layer (for example, an adhesive layer with a two-layer structure or a second adhesive layer with a three-layer structure) has a modulus of elasticity of 15 MPa or more, preferably 20 MPa or more, more preferably 30 MPa or more.

The adhesive layer preferably has a modulus of elasticity of 80 MPa or less, more preferably 70 MPa or less, still more preferably 60 MPa or less. More specifically, the adhesive layer has a modulus of elasticity of 15 MPa or more and 80 MPa or less.

In a laminate according to the present disclosure, an adhesive layer closest to a sealant layer has a modulus of elasticity of 15 MPa or more, and this can suppress the elongation of the sealant layer when the laminate is torn by hand. Thus, a packaging bag produced using a laminate according to the present disclosure tends to have good hand tearability (tearability), that is, openability, after heat sterilization treatment.

In one embodiment of a laminate according to the present disclosure, in an adhesive layer located between a sealant layer and a substrate adjacent to the sealant layer (for example, an adhesive layer with a two-layer structure or a second adhesive layer with a three-layer structure), the product of the modulus of elasticity (MPa) and the thickness ($\mu$m) of the adhesive layer is preferably 40 or more. The product of the modulus of elasticity and the thickness of the adhesive layer is more preferably 60 or more and is preferably 80 or less, more preferably 60 or less, for example, 40 or more and 60 or less.

Here, the modulus of elasticity of an adhesive layer is measured using an atomic force microscope (AFM) for a cross section of the adhesive layer.

The details of the measurement conditions of the modulus of elasticity using an AFM are described in the section of Examples.

In a laminate according to the present disclosure, the adhesive layer has a thickness of 0.5 $\mu$m or more, preferably 1.0 $\mu$m or more, more preferably 1.2 $\mu$m or more. The adhesive layer has a thickness of 10.0 $\mu$m or less, preferably 8.0 $\mu$m or less, more preferably 5.0 $\mu$m or less, for example, 0.5 $\mu$m or more and 10.0 $\mu$m or less. A laminate including an adhesive layer with a thickness equal to or higher than the lower limit tends to have high laminate strength even after heat treatment.

In one embodiment of a laminate according to the present disclosure, an adhesive layer in which the product of the modulus of elasticity (MPa) and the thickness ($\mu$m) is 40 or more may be located between a sealant layer and a substrate adjacent to the sealant layer. A packaging bag produced using a laminate of such an embodiment tends to have good hand tearability (tearability), that is, openability, after retort treatment.

In one embodiment of a laminate according to the present disclosure, an adhesive layer in which the product of the modulus of elasticity (MPa) and the thickness ($\mu$m) is 40 or more and 60 or less may be located between a sealant layer and a substrate adjacent to the sealant layer. A packaging bag produced using a laminate of such an embodiment tends to have better hand tearability (openability) and impact resistance (resistance to drop-induced package rupture) after retort treatment.

(First Adhesive Layer)

The modulus of elasticity of a cross section of a first adhesive layer measured with an atomic force microscope (AFM) is preferably 10 MPa or more, more preferably 15 MPa or more, still more preferably 20 MPa or more, and is preferably 100 MPa or less, more preferably 80 MPa or less, still more preferably 70 MPa or less, for example, 10 MPa or more and 100 MPa or less. When the first substrate is a barrier substrate, a packaging bag produced using a laminate including a first adhesive layer with a modulus of elasticity in the above range tends to have good gas barrier properties and appearance even after heat treatment, such as heat sterilization treatment. When a print layer is provided on a surface of the first substrate facing the first adhesive layer, the first adhesive layer with a modulus of elasticity equal to or lower than the upper limit tends to have high adhesiveness to the print layer.

The first adhesive layer has a thickness of 0.5 $\mu$m or more, preferably 1.0 $\mu$m or more, more preferably 1.5 $\mu$m or more, still more preferably 2.5 $\mu$m or more, and preferably 10.0 $\mu$m or less, more preferably 8.0 $\mu$m or less, still more preferably 6.0 $\mu$m or less, particularly preferably 5.0 $\mu$m or less, for example, 0.5 $\mu$m or more and 10.0 $\mu$m or less. When a print layer is provided on a surface of the first substrate facing the first adhesive layer, the first adhesive layer with a thickness equal to or higher than the lower limit can appropriately cover a difference in the level caused by the print layer, and a packaging bag having a good appearance tends to be produced. A laminate including a first adhesive layer with a thickness equal to or higher than the lower limit tends to have high laminate strength even after heat treatment.

(Second Adhesive Layer)

The modulus of elasticity of a cross section of a second adhesive layer measured with an AFM is 15 MPa or more, preferably 20 MPa or more, more preferably 30 MPa or more.

The second adhesive layer has a modulus of elasticity of 80 MPa or less, preferably 70 MPa or less, more preferably 60 MPa or less. The second adhesive layer has a modulus of elasticity, for example, 5.0 MPa or more and 80 MPa or less. When the first substrate is a barrier substrate, a packaging bag produced using a laminate including a second adhesive layer having such a modulus of elasticity tends to have good gas barrier properties even after heat treatment, such as heat sterilization treatment. The second adhesive layer having such a modulus of elasticity can be formed, for example, by using a solvent-based adhesive or a solvent-free adhesive described later and appropriately changing the type and molecular weight of a polymer component contained in a main agent described later, the type of curing agent, the mole ratio (NCO/OH), and aging conditions.

The second adhesive layer has a thickness of 0.5 $\mu$m or more, preferably 1.0 $\mu$m or more, more preferably 1.2 $\mu$m or more. The second adhesive layer has a thickness of 10.0 $\mu$m or less, preferably 8.0 $\mu$m or less, more preferably 6.0 $\mu$m or less, for example, 0.5 $\mu$m or more and 10.0 $\mu$m or less. A laminate including a second adhesive layer with a thickness equal to or higher than the lower limit tends to have high laminate strength even after heat treatment.

In another embodiment of a laminate according to the present disclosure, the modulus of elasticity of a cross section of the second adhesive layer measured with an AFM in the first embodiment is preferably less than 35.0 MPa, more preferably 30.0 MPa or less, still more preferably 25.0 MPa or less, and is preferably 5.0 MPa or more, more preferably 10.0 MPa or more, still more preferably 15.0 MPa or more, for example, 5.0 MPa or more and less than 35.0 MPa. When the first substrate is a barrier substrate, a packaging bag produced using a laminate including a second adhesive layer having such a modulus of elasticity tends to have good gas barrier properties even after heat treatment, such as heat sterilization treatment. The second adhesive layer having such a modulus of elasticity can be formed, for example, by using a solvent-based adhesive or a solvent-free adhesive described later and appropriately changing the type and molecular weight of a polymer component contained in a main agent described later, the type of curing agent, the mole ratio (NCO/OH), and aging conditions.

When the second adhesive layer has the modulus of elasticity of the first embodiment, in one embodiment, the second adhesive layer preferably has a thickness of 1.2 $\mu$m or more, more preferably 1.4 $\mu$m or more, still more preferably 1.6 $\mu$m or more, and preferably 10.0 $\mu$m or less, more preferably 8.0 $\mu$m or less, still more preferably 6.0 $\mu$m or less, for example, 1.2 $\mu$m or more and 10.0 $\mu$m or less. A laminate including a second adhesive layer with a thickness equal to or higher than the lower limit tends to have high laminate strength even after heat treatment.

The modulus of elasticity of a cross section of the second adhesive layer measured with an AFM is, in the second embodiment, preferably 35.0 MPa or more, and preferably 80 MPa or less, more preferably 70 MPa or less, still more preferably 60 MPa or less, for example, 35.0 MPa or more and 80 MPa or less. A laminate including a second adhesive layer with a modulus of elasticity equal to or lower than the upper limit tends to have high laminate strength. A second adhesive layer having such a modulus of elasticity can be formed, for example, by using a solvent-free adhesive described later and appropriately changing the type and molecular weight of a polymer component contained in a main agent described later, the type of curing agent, the mole ratio (NCO/OH), and aging conditions.

When the second adhesive layer has the modulus of elasticity of the second embodiment, in one embodiment, the second adhesive layer preferably has a thickness of 0.5 $\mu$m or more, more preferably 1.0 $\mu$m or more, still more preferably 1.2 $\mu$m or more, and preferably 3.5 $\mu$m or less, more preferably 3.0 $\mu$m or less, still more preferably 2.0 $\mu$m or less, for example, 0.5 $\mu$m or more and 3.5 $\mu$m or less. A packaging bag produced using a laminate including such a second adhesive layer tends to have high impact resistance and accordingly high resistance to drop-induced package rupture and also have high tearability and accordingly high openability. Furthermore, the packaging bag has, for example, high recyclability.


(Adhesive Agent)

Each of the adhesive layer, the first adhesive layer, and the second adhesive layer is formed of an adhesive agent. The adhesive agent that forms the first adhesive layer and the adhesive agent that forms the second adhesive layer may be the same or different. The adhesive agent may be any of a one-component adhesive, a two-component adhesive, and a non-curable adhesive, and is preferably a two-component adhesive from the perspective that the modulus of elasticity described above can be easily adjusted to the range described above.

A method for producing a laminate using an adhesive agent may be a method of applying the adhesive agent to an object, then placing another object on the resulting adhesive layer, and curing the adhesive layer sandwiched therebetween. The object is, for example, a first substrate, a second substrate, or a sealant film. The step of curing the adhesive layer is hereinafter also referred to as an "aging step".

The conditions for aging the adhesive agent are described below. The aging temperature is preferably 25°C or more, more preferably 30°C or more, still more preferably 35°C or more, and is preferably 80°C or less, more preferably 70°C or less, still more preferably 60°C or less. The aging time is preferably 5 hours or more, more preferably 10 hours or more, still more preferably 20 hours or more, and is preferably 150 hours or less, more preferably 135 hours or less, still more preferably 120 hours or less. The modulus of elasticity of the adhesive layer tends to increase with the aging temperature. The modulus of elasticity of the adhesive layer tends to increase with the aging time.

The adhesive agent is, for example, a polyurethane adhesive agent, a polyester adhesive agent, a polyether adhesive agent, a rubber adhesive agent, a vinyl adhesive agent, an olefin adhesive agent, a silicone adhesive agent, an epoxy adhesive agent, or a phenolic adhesive agent. Among these, from the perspective of easily adjusting the modulus of elasticity to the above-described range, a polyurethane adhesive agent, a polyester adhesive agent, and a polyether adhesive agent are preferred, a polyurethane adhesive agent and a polyester adhesive agent are more preferred, a polyurethane adhesive agent is still more preferred, and a two-component polyurethane adhesive agent is particularly preferred.

The adhesive agent may be a solvent-based adhesive or a solvent-free adhesive.

The solvent-based adhesive refers to an adhesive agent used for a method of applying an adhesive agent to an object, heating the adhesive agent in an oven or the like to volatilize a solvent in the adhesive agent, and then bonding the object to another object. In a two-component adhesive, either one or both of the main agent and the curing agent contain a solvent. The solvent is, for example, an organic solvent, more specifically, a hydrocarbon solvent, such as toluene, xylene, n-hexane, or methylcyclohexane; an ester solvent, such as ethyl acetate, n-propyl acetate, n-butyl acetate, or isobutyl acetate; an alcohol solvent, such as methanol, ethanol, isopropyl alcohol, n-butyl alcohol, or isobutyl alcohol; or a ketone solvent, such as acetone, methyl ethyl ketone, methyl isobutyl ketone, or cyclohexanone.

The solvent-free adhesive refers to an adhesive agent used for a method of applying an adhesive agent to an object and then bonding the object to another object without necessarily requiring a step of heating the adhesive agent in an oven or the like to volatilize a solvent. In a two-component adhesive, both the main agent and the curing agent contain substantially no solvent. The phrase "contain substantially no" includes a case where a solvent used as a reaction medium at the time of producing a constituent of an adhesive agent, or a constituent of the main agent and/or the curing agent in the case of a two-component adhesive, is not completely removed, and a trace amount of solvent remains in the adhesive agent or in the main agent and/or the curing agent in the case of a two-component adhesive.

The two-component polyurethane adhesive agent has a main agent and a curing agent. The two-component polyurethane adhesive agent may be of a solvent type or a solvent-free type. The two-component polyurethane adhesive agent will be described below.

The polyurethane adhesive agent has, for example, a main agent containing a polyol compound and a curing agent containing a polyisocyanate compound. A cured product (reaction product) formed by mixing such a main agent and a curing agent is, for example, polyurethane, more specifically, a polyester polyurethane, a polyether polyurethane, a polycarbonate polyurethane, or an acrylic polyurethane.

The polyol compound has two or more hydroxy groups per molecule. The polyol compound is, for example, a polyester polyurethane polyol, a polyester polyol, a polyether polyol, a polycarbonate polyol, or an acrylic polyol. Among these, from the perspective that an adhesive layer with a modulus of elasticity in the above-described range is easily formed, a polyester polyurethane polyol and a polyester polyol are preferred, a polyester polyurethane polyol is more preferred in the case of a solvent-based adhesive, and a polyester polyol is more preferred in the case of a solvent-free adhesive.

The polyester polyurethane polyol is a compound with two or more hydroxy groups, two or more ester bonds, and two or more urethane bonds per molecule, and has, for example, a polyester polyurethane structure as a main backbone. The polyester polyol is a compound with two or more hydroxy groups and two or more ester bonds per molecule and has, for example, a polyester structure as a main backbone. The polyether polyol is a compound with two or more hydroxy groups and two or more ether bonds per molecule. The polycarbonate polyol is a compound with two or more hydroxy groups and two or more carbonate bonds per molecule.

From the perspective of coatability, a polymer component (for example, a polyol compound) contained in a main agent of a two-component solvent-based adhesive has a weight-average molecular weight (Mw) of preferably 11,000 or more, more preferably 13,000 or more, still more preferably 15,000 or more, still more preferably 18,000 or more, particularly preferably 20,000 or more, and preferably 100,000 or less, more preferably 50,000 or less, still more preferably 40,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent has a polydispersity (Mw/Mn) of preferably 5.0 or less, more preferably 4.5 or less, still more preferably 4.0 or less, and preferably 1.5 or more, more preferably 2.0 or more, still more preferably 2.5 or more. Mn denotes the number-average molecular weight of the polymer component (for example, the polyol compound) contained in the main agent. The average molecular weight is measured in terms of polystyrene by gel permeation chromatography (GPC) according to JIS K 7252-1: 2016.

From the perspective of coatability, a polymer component (for example, a polyol compound) contained in a main agent of a two-component solvent-free adhesive has a weight-average molecular weight (Mw) of preferably 800 or more, more preferably 1,200 or more, still more preferably 2,000 or more, and preferably 10,000 or less, more preferably 8,000 or less, still more preferably 6,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent preferably has a polydispersity (Mw/Mn) of 2.8 or less, more preferably 2.7 or less, still more preferably 2.6 or less, particularly preferably 2.5 or less, and preferably 1.2 or more, more preferably 1.5 or more, still more preferably 2.0 or more. Mn denotes the number-average molecular weight of the polymer component (for example, the polyol compound) contained in the main agent.

The polyisocyanate compound has two or more isocyanate groups per molecule. The polyisocyanate compound is, for example, an aromatic isocyanate or an aliphatic isocyanate. The polyisocyanate compound may also be a blocked isocyanate compound produced by an addition reaction using a known isocyanate blocking agent by an appropriate traditional method.

The polyisocyanate compound is, for example, an aliphatic isocyanate compound, such as tetramethylene diisocyanate, hexamethylene diisocyanate (HDI), norbornene diisocyanate, or isophorone diisocyanate (IPDI); an aromatic isocyanate compound, such as diphenylmethane diisocyanate, hydrogenated diphenylmethane diisocyanate, xylylene diisocyanate (XDI), hydrogenated xylylene diisocyanate, tolylene diisocyanate (TDI), naphthalene diisocyanate, or $\alpha,\alpha,\alpha',\alpha'$-tetramethyl-m-xylylene diisocyanate; a dimer or a trimer (for example, an isocyanurate) derived from these compounds; or an adduct, a biuret, or an allophanate produced by reacting these compounds with a low-molecular-weight active hydrogen compound, an alkylene oxide adduct thereof, or a high-molecular-weight active hydrogen compound.

The low-molecular-weight active hydrogen compound is, for example, ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexanedimethanol, m-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, or m-xylylenediamine, preferably trimethylolpropane. The high-molecular-weight active hydrogen compound is, for example, a polyester, a polyether polyol, or a polyamide.

The main agent containing the polyol compound and the curing agent containing the polyisocyanate compound are preferably used, for example, in such a quantitative ratio that the mole ratio (NCO/OH) of all the isocyanate groups of the polyisocyanate compound to all the hydroxy groups of the polyol compound is as described below. That is, the mole ratio (NCO/OH) is preferably 0.5 or more, more preferably 1.0 or more, still more preferably 1.5 or more, and is preferably 8.0 or less, more preferably 6.0, still more preferably 5.0 or less, and, in the case of a solvent-free adhesive, is still more preferably 4.0 or less, particularly preferably 3.0 or less. As the mole ratio (NCO/OH) increases, the modulus of elasticity of the adhesive layer tends to increase, and as the mole ratio (NCO/OH) decreases, the modulus of elasticity of the adhesive layer tends to decrease.

<Sealant Layer>

A laminate according to the present disclosure includes a sealant layer.

The sealant layer is an unstretched polypropylene film containing polypropylene as a main component. The sealant layer contains a resin material of the same type as the polypropylene stretched substrate, that is, polypropylene, as a main component. Thus, the laminate can be made of a single material. This eliminates the need to separate the substrate and the sealant layer of a used packaging bag collected and can improve the recyclability of the packaging bag.

The sealant layer preferably has a polypropylene content of more than 50% by mass, more preferably 60% by mass or more, still more preferably 70% by mass or more, still more preferably 80% by mass or more, particularly preferably 85% by mass or more, 90% by mass or more, or 95% by mass or more. A laminate including such a sealant layer has, for example, high recyclability.

The polypropylene is, for example, a homopolypropylene, a random polypropylene, such as a propylene-$\alpha$-olefin random copolymer, or a block polypropylene, such as a propylene-$\alpha$-olefin block polypropylene. The $\alpha$-olefin is described in detail above. From the perspective of heat sealability, the polypropylene has a density of, for example, 0.88 g/cm$^3$ or more and 0.92 g/cm$^3$ or less. The density is measured in accordance with JIS K 7112: 1999, Method D (density-gradient tube method, 23°C). From the perspective of environmental load reduction, biomass-derived polypropylene and/or recycled polypropylene may be used.

The sealant layer may contain the additive agent described above.

The sealant layer may have a monolayer structure or a multilayer structure.

In one embodiment of a laminate according to the present disclosure, the sealant layer has a monolayer structure. In one embodiment, a laminate according to the present disclosure has a two-layer structure in which the sealant layer includes a first layer serving as a sealing surface of the laminate and a second layer serving as a core layer. In one embodiment, a laminate according to the present disclosure has a three-layer structure in which the sealant layer includes a first layer serving as a sealing layer of the laminate, a second layer serving as a core layer, and a third layer serving as a surface layer located on the adhesive layer side.

The sealant layer preferably has a thickness of 10 $\mu$m or more, more preferably 20 $\mu$m or more, and preferably 200 $\mu$m or less, more preferably 150 $\mu$m or less, for example, 10 $\mu$m or more and 200 $\mu$m or less. A laminate including a sealant layer with a thickness equal to or higher than the lower limit has, for example, high seal strength. A laminate including a sealant layer with a thickness equal to or lower than the upper limit has, for example, high processability. When a pouch (in particular, a heat-sterilized pouch) is produced from a laminate, the sealant layer preferably has a thickness of 30 $\mu$m or more and 100 $\mu$m or less.

The sealant layer has a thermal shrinkage ratio of 0% or more and 0.5% or less in the flow direction (MD direction) after heating at 120°C for 15 minutes. The sealant layer preferably has a thermal shrinkage ratio of 0.4% or less, more preferably 0.3% or less, for example, 0% or more and 0.3% or less.

A laminate according to the present disclosure includes a sealant layer with a thermal shrinkage ratio in the above range. A packaging bag produced using a laminate of such an embodiment has less shrinkage during heating, such as heat sterilization treatment, and is less likely to form wrinkles. Furthermore, the hand tearability after heat sterilization treatment, that is, the openability, tends to be better.

The thermal shrinkage ratio of the sealant layer can be adjusted by the selection of the type of polypropylene and each component content.

Regarding the type of polypropylene, since block polypropylene has higher heat resistance than random polypropylene, the thermal shrinkage ratio can be increased by increasing the block polypropylene content, and the thermal shrinkage ratio can be decreased by increasing the random polypropylene content.

When the sealant layer contains a block polypropylene, since a higher ethylene-propylene rubber (EPR) content results in lower heat resistance, the ethylene-propylene rubber (EPR) content can be increased to increase the thermal shrinkage ratio and can be decreased to reduce the thermal shrinkage ratio.

Furthermore, when the sealant layer contains a block polypropylene, since a higher additive agent content, such as polyethylene content or elastomer content, results in lower heat resistance, the additive agent content can be increased to increase the thermal shrinkage ratio and can be decreased to reduce the thermal shrinkage ratio.

The main melting peak temperature of the sealant layer measured in accordance with JIS K 7121: 2012 is preferably 140°C or more, more preferably 160°C. When the main melting peak temperature is observed at 140°C or more in the sealant layer, a packaging bag produced using the laminate can have improved drop impact resistance. Furthermore, when the main melting peak temperature is observed at 160°C or more in the sealant layer, a packaging bag produced using the laminate can have improved heat resistance.

The melting peak temperature of a sealant layer is determined by differential scanning calorimetry (DSC). In the present disclosure, the melting peak temperature of a sealant layer is measured under the following conditions. First, a standing pouch is prepared from the laminate and is filled with water from an opening, the opening is hermetically heat-sealed, and the sealed pouch is then subjected to a retort treatment of a hot water type at a retort temperature of 121°C for a retort time of 30 minutes. A sealant film corresponding to a sealant layer in a non-heat-seal portion is separated as a test specimen from the standing pouch after the retort treatment. In accordance with JIS K 7121, the separated sealant film is held at 20°C for 1 minute and is then heated from 20°C to 200°C at a heating rate of 10°C/min to measure the melting peak temperature. At this time, the nitrogen gas flow rate is 20 ml/min. Details of these conditions will be described in Examples. The term "melting peak temperature", as used herein, refers to a peak top temperature of a melting peak in a DSC curve.

When there is a plurality of melting peaks, the main melting peak temperature refers to the peak top temperature of the largest melting peak.

The sealant film can be produced, for example, by a known method. The sealant film can be produced by mixing the materials described above by a common method and forming the resulting mixture into a film by a common method. The sealant film is preferably a film produced by extrusion. The extrusion is preferably performed by a T-die method or an inflation method. More specifically, the sealant film can be formed by drying materials constituting the sealant film as required, then supplying the materials to a melt extruder heated to a temperature equal to or higher than the melting points of the materials to melt the materials, extruding the materials into a film, for example, from a die, such as a T-die, and rapidly cooling and solidifying the extruded film using a rotating cooling drum or the like.

The melt extruder can be a single-screw extruder, a twin-screw extruder, a vent extruder, a tandem extruder, or the like, depending on the purpose. The temperature of the molten polymer extruded from the melt extruder may be, for example, 200°C or more and 300°C or less, or may be 220°C or more and 270°C or less.

When the sealant layer contains a block polypropylene, the main melting peak temperature of the sealant layer can be adjusted by the ethylene-propylene rubber (EPR) content.

More specifically, when the sealant layer contains a block polypropylene, a higher ethylene-propylene rubber (EPR) content can result in a shift toward lower temperatures, whereas a lower content can result in a shift toward higher temperatures.

The sealant layer preferably has a composite modulus of elasticity of 900 MPa or less, more preferably 830 MPa or less, still more preferably 700 MPa or less. A packaging bag produced using a laminate including a sealant layer with a composite modulus of elasticity in the above range tends to have high impact resistance and accordingly high resistance to drop-induced package rupture.

The composite modulus of elasticity of the sealant layer is measured by a nanoindentation method. More specifically, the composite modulus of elasticity is measured using a nanoindenter on a cross section of the sealant layer of the laminate as a measurement surface.

The cross section is obtained by folding a laminate according to the present disclosure into a V shape with the sealant film facing inward, heat sealing the folded laminate so as to have a width of 130 mm and a height of 165 mm to produce a bag-like pouch, filling the pouch with 100 mL of water from an opening, heat-sealing the opening to seal the pouch, and tearing the pouch in the thickness direction of the laminate after a retort sterilization treatment of a hot water type at a retort temperature of 121°C for a retort time of 30 minutes.

The indenter is pressed into an exposed cross section of the sealant layer at three positions in the thickness direction of the sealant layer: a position 2 $\mu$m inside from the interface with the adhesive layer, a position near the central portion in the thickness direction, and a position 2 $\mu$m inside from the sealing surface. For example, when the sealant layer has a three-layer structure, the position 2 $\mu$m inside from the sealing surface corresponds to the first layer (sealing layer), the position near the central portion in the thickness direction corresponds to the second layer (core layer), and the position 2 $\mu$m inside from the interface with the adhesive layer corresponds to the third layer (surface layer).

The measurement conditions are as described below. A Berkovich indenter (triangular pyramid indenter) is used as the indenter of the nanoindenter. The indenter is pressed into the sealant layer from the cross section of the sealant layer to an indentation depth of 100 nm over 3 seconds, this state is held for 5 seconds, and the load is then removed over 3 seconds to obtain the maximum load $P_{max}$, the projected contact area $A_p$ at the maximum depth, and a load-displacement curve. The composite modulus of elasticity is calculated from the load-displacement curve using the following formula (1).

[Math. 1]

$$E_r = \frac{S\sqrt{\pi}}{2\sqrt{A_p}} \qquad \cdots \quad (1)$$

In the formula (1), $A_p$ denotes the projected contact area, S denotes the contact stiffness, and $E_r$ denotes the composite modulus of elasticity of the sealant layer.

The measurement is performed in a room temperature (23°C) environment. The measurement is performed at five or more locations (five points) on the same cross section, and the composite modulus of elasticity is defined as the arithmetic mean of the values at five locations (five points) measured with good reproducibility. When the sealant layer has a multilayer structure including two or more layers, the arithmetic mean calculated from the values measured at positions near the central portion corresponding to the core layer is defined as the composite modulus of elasticity of the sealant layer. Details of the measurement conditions are described in the section of Examples.

When the sealant layer contains a block polypropylene, the composite modulus of elasticity of the sealant layer can be adjusted by the ethylene-propylene rubber (EPR) content. More specifically, as the ethylene-propylene rubber (EPR) content increases, the composite modulus of elasticity can be decreased, and as the ethylene-propylene rubber (EPR) content decreases, the composite modulus of elasticity can be increased.

When the sealant layer contains a block polypropylene, the composite modulus of elasticity of the sealant layer can be adjusted by the amount of additive agent, such as polyethylene or an elastomer. More specifically, as the additive agent content increases, the composite modulus of elasticity can be decreased, and as the additive agent content decreases, the composite modulus of elasticity can be increased.

The sealant layer is preferably an unstretched polypropylene film from the perspective of heat sealability, and the unstretched polypropylene film can be produced, for example, by a casting method, a T-die method, an inflation method, or the like.

The sealant layer may be subjected to the surface treatment described above.

(Laminate)

In one embodiment, a laminate according to the present disclosure has a two-layer structure of a substrate and a sealant layer and includes an adhesive layer between the substrate and the sealant layer.

In a laminate according to one embodiment, the difference between the thermal shrinkage ratio of a substrate and the thermal shrinkage ratio of a sealant layer is preferably less than 1.5%, more preferably 1.3% or less, still more preferably 1.2% or less, particularly preferably 1.0% or less, and is preferably more than 0%, for example, more than 0% and less than 1.5%. A packaging bag produced using a laminate in which the thermal shrinkage ratio of a substrate is higher than the thermal shrinkage ratio of a sealant layer and the difference between the thermal shrinkage ratio of the substrate and the thermal shrinkage ratio of the sealant layer is less than 1.5% is less likely to have strain during heating, such as heat sterilization treatment, and tends to have better hand tearability, that is, openability, after heat sterilization treatment.

In one embodiment, a laminate according to the present disclosure has a three-layer structure of a first substrate, a second substrate, and a sealant layer and includes an adhesive layer (second adhesive layer) between the second substrate and the sealant layer.

In a laminate according to one embodiment, the difference between the thermal shrinkage ratio of a second substrate and the thermal shrinkage ratio of a first substrate is preferably -2.0% or more, more preferably -1.5% or more, still more preferably -1.2% or more, and is preferably 0% or less, for example, -2.0% or more and 0% or less. In a packaging bag produced using a laminate in which the thermal shrinkage ratio of a second substrate is lower than the thermal shrinkage ratio of a first substrate, since the second substrate has high heat resistance, there is a tendency that the thermal shrinkage of the entire packaging bag can be suppressed during heating, such as heat sterilization treatment. A packaging bag produced using a laminate having a small difference between the thermal shrinkage ratio of a second substrate and the thermal shrinkage ratio of a first substrate is less likely to have strain during heating, such as heat sterilization treatment, and tends to have better hand tearability, that is, openability, after heat sterilization treatment.

In a laminate according to one embodiment, the difference between the thermal shrinkage ratio of a second substrate and the thermal shrinkage ratio of a sealant layer is preferably less than 1.5%, more preferably 1.3% or less, still more preferably 1.2% or less, particularly preferably 1.0% or less, and preferably more than 0%, for example, more than 0% and less than 1.5%. A packaging bag produced using a laminate in which the thermal shrinkage ratio of a second substrate is higher than the thermal shrinkage ratio of a sealant layer and the difference between the thermal shrinkage ratio of the second substrate and the thermal shrinkage ratio of the sealant layer is less than 1.5% is less likely to have strain during heating, such as heat sterilization treatment, and tends to have better hand tearability, that is, openability, after heat sterilization treatment.

[Packaging Bag]

A laminate according to the present disclosure is suitably used as a packaging material. The packaging material is used to produce a packaging bag. A packaging bag according to the present disclosure includes the laminate described above. A laminate according to the present disclosure can be used as a packaging material to produce a packaging bag. In one embodiment, a packaging bag can be produced by folding a laminate according to the present disclosure in half such that a substrate or a first substrate is positioned on the outside and a sealant layer is positioned on the inside, and heat-sealing an end portion and the like of the laminate. In another embodiment, a packaging bag can be produced by stacking a plurality of laminates according to the present disclosure with sealant layers facing each other, and heat-sealing an end portion and the like of the laminates. The packaging bag may be entirely constituted by the laminate, or the packaging bag may be partially constituted by the laminate.

The packaging bag may have various forms, for example, a standing pouch type, a side seal type, a two-sided seal type, a three-sided seal type, a four-sided seal type, an envelope seal type, a butt seal type (pillow seal type), a ribbed seal type, a flat bottom seal type, a square bottom seal type, or a gusset type. The heat sealing method is, for example, bar sealing, rotating roll sealing, belt sealing, impulse sealing, high-frequency sealing, or ultrasonic sealing.

The packaging bag may have an easy-to-open portion. The easy-to-open portion is, for example, a notch portion serving as a starting point for tearing a packaging bag, or a half-cut line formed using laser processing, a cutter, or the like as a tear line for a packaging bag.

The packaging bag may have a venting mechanism. The venting mechanism is configured to allow the inside of the packaging bag to communicate with the outside to release the vapor when the vapor pressure in the packaging bag reaches a predetermined value or more, and is also configured to suppress the release of the vapor at a portion other than the venting mechanism. The venting mechanism includes, for example, a venting seal portion protruding from a side seal portion toward the inside of the packaging bag and an unsealed portion separated from a content storage portion by the venting seal portion. The unsealed portion communicates with the outside of the packaging bag. The packaging bag in which the contents are filled and the opening is heat-sealed is heated using a microwave oven or the like. This increases the internal pressure and separates the venting seal portion. The vapor is released to the outside of the packaging bag through the separated portion of the venting seal portion and through the unsealed portion.

The contents to be contained in a packaging bag include, for example, a liquid, a solid, a powder, or a gel. The contents may be a food or drink or may be a non-food or non-drink, such as a chemical product, a cosmetic product, a pharmaceutical agent, a metal component, or an electronic component. After the contents are stored in a packaging bag, the opening of the packaging bag can be heat-sealed to seal the packaging bag.

Furthermore, the contents may be a heat-sterilized food (heat-sterilized food, such as retort food, boiled food, or pasteurized beverage). A packaging bag according to the present disclosure may be a pouch for storing a heat-sterilized food.

As specific examples of the packaging bag, a pouch and a standing pouch will be described below.

A pouch is a small-sized packaging bag and is used to store, for example, 1 g or more and 200 g or less of contents. The contents to be stored in a pouch include, for example, sauce, soy sauce, dressing, ketchup, syrup, cooking alcohol, or another liquid or viscous seasoning; liquid soup, powdered soup, or fruit juice; spice; pet food; liquid beverage, jelly beverage, instant food, or another food or drink; or non-food, such as a chemical product, a cosmetic product, a pharmaceutical agent, a metal component, or an electronic component.

A standing pouch is used, for example, to store 50 g or more and 2000 g or less of contents. The contents to be stored in a standing pouch include, for example, shampoo, rinse, conditioner, hand soap, body soap, aromatic, deodorant, deodorizer, insect repellent, or detergent; dressing, edible oil, mayonnaise, or another liquid or viscous seasoning; liquid beverage, jelly beverage, instant food, or another food or drink; pet food; cream; a metal component, or an electronic component.

In one embodiment, the contents of a packaging bag include pet food.

In one embodiment, a packaging bag according to the present disclosure can suppress the deterioration of the gas barrier properties even when subjected to heat treatment and is therefore suitable as a heat-sterilized pouch or a microwavable packaging bag. A packaging bag according to the present disclosure is also suitable as a microwave boiling or retort pouch. Here, the heat-sterilized pouch refers to either a pouch that can be subjected to heat sterilization treatment in a state of storing the contents or a pouch that has been subjected to heat sterilization treatment in a state of storing the contents. The microwavable packaging bag refers to a packaging bag that can be heated with a microwave oven.

The heat-sterilized pouch may be a pouch subjected to pressurized heat sterilization treatment (hereinafter also referred to as a "retort pouch"), a pouch subjected to boiling treatment (hereinafter also referred to as a "boiling pouch"), a pouch subjected to pasteurization treatment (hereinafter also referred to as "pasteurization pouch"), or the like. The retort pouch is a packaging bag that is filled with contents, such as food and drink, is sealed, and is then subjected to heat sterilization treatment (pressurized heat sterilization treatment) with water or water vapor at a temperature of more than 100°C under pressure. The boiling pouch or the pasteurization pouch is a packaging bag that is filled with contents, such as food and drink, is sealed, and is then subjected to boiling treatment at a temperature of 100°C or less.

In one embodiment, a packaging bag according to the present disclosure is a retort pouch. The pressurized heat sterilization treatment may be performed under various conditions, and the retort pouch includes any pouch subjected to a general pressurized heat sterilization treatment. For example, among pressurized heat sterilization treatments, a treatment at a treatment temperature of 105°C or more and 115°C or less may be referred to as a semi-retort treatment, a treatment at a treatment temperature of more than 115°C and less than 130°C may be referred to as a retort treatment, and a treatment at a treatment temperature of more than 135°C and 140°C or less may be referred to as a high retort treatment.

The retort treatment time is, for example, 5 minutes or more and 60 minutes or less, preferably 15 minutes or more and 40 minutes or less.

The oxygen permeability (unit: cc/m$^2$·day·atm) of a retort pouch according to the present disclosure is measured in accordance with JIS K 7126-2: 2006 at a temperature of 23°C and at a relative humidity of 90%.

The retort pouch preferably has an oxygen permeability of 3.0 or less, more preferably 2.0 or less, still more preferably 1.5 or less, particularly preferably 1.0 or less. A retort pouch with an oxygen permeability of 3.0 or less after retort treatment can be suitably used as food packaging for long-term storage.

The lower limit of the oxygen permeability of the retort pouch is preferably as low as possible and may be, for example, 0.1.

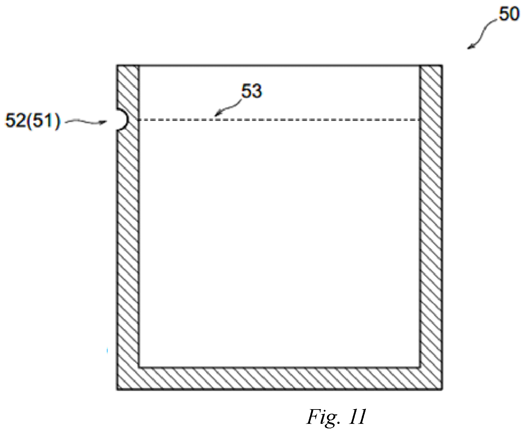

Fig. 11 illustrates a packaging bag 50 produced by bonding two laminates. The hatched area indicates a heat-sealed portion. The packaging bag 50 may have an easy-to-open portion 51. The easy-to-open portion 51 is, for example, a notch portion 52 serving as a starting point for tearing, or a half-cut line 53 formed using laser processing, a cutter, or the like as a tear line.

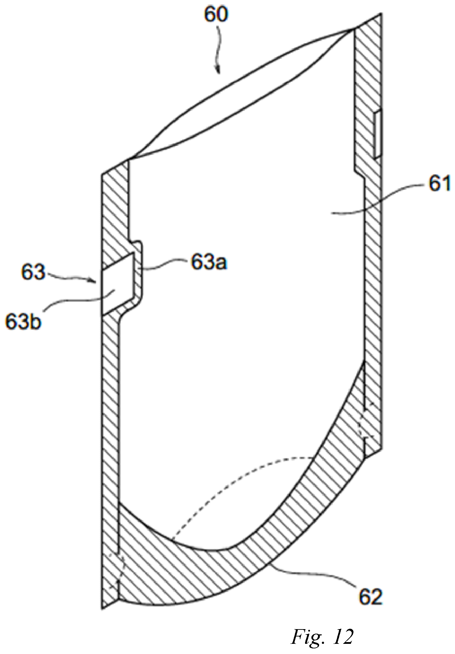

Fig. 12 schematically illustrates an example of the structure of a standing pouch. The hatched area indicates a heat-sealed portion. In one embodiment, a standing pouch 60 includes a trunk portion (side sheet) 61 and a bottom portion (bottom sheet) 62. The side sheet 61 and the bottom sheet 62 may be composed of the same member or different members. The bottom sheet 62 can maintain the shape of the side sheet 61 and make the pouch free-standing, thus forming a pouch of standing type. A storage space for storing contents is formed in a region surrounded by the side sheet 61 and the bottom sheet 62.

The standing pouch 60 may have a venting mechanism 63. The venting mechanism 63 includes a venting seal portion 63a protruding from the side seal portion toward the inside of the packaging bag and an unsealed portion 63b separated from a content storage portion by the venting seal portion 63a. The unsealed portion 63b communicates with the outside of the packaging bag.

In the standing pouch, only the trunk portion may be composed of a laminate according to the present disclosure, only the bottom portion may be composed of the laminate, or both the trunk portion and the bottom portion may be composed of the laminate.

In one embodiment, the side sheet can be formed by making a bag such that a sealant layer of a laminate according to the present disclosure is the innermost layer. In one embodiment, the side sheet can be formed by preparing two laminates according to the present disclosure, stacking these laminates with sealant layers facing each other, and heat-sealing side edge portions on both sides of the laminates to make a bag.

In another embodiment, the side sheet can be formed by preparing two laminates according to the present disclosure, stacking these laminates with sealant layers facing each other, inserting two laminates folded into a V shape with the sealant layers being on the outside between the laminates in the side edge portions on both sides of the stacked laminates, and heat-sealing the laminates. A standing pouch with a trunk portion having a side gusset can be produced in this way.

In one embodiment, the bottom sheet can be formed by inserting a laminate between lower portions of side sheets made into a bag and heat-sealing them. More specifically, the bottom sheet can be formed by inserting a laminate folded into a V shape with a sealant layer being on the outside between lower portions of side sheets made into a bag and heat-sealing them.

In one embodiment, the bottom portion is formed by preparing two laminates, stacking these laminates with sealant layers facing each other, folding another laminate into a V shape with a sealant layer being on the outside, placing the other laminate between the lower portions of the laminates facing each other, and heat-sealing them. Two sides adjacent to the bottom portion are then heat-sealed to form a trunk portion. Thus, a standing pouch according to one embodiment can be formed.

[Mechanism of Action]

A laminate for a packaging material is used to make a packaging bag, such as a heat-sterilized pouch. A packaging bag using a laminate is opened after a high-temperature treatment, such as a heat sterilization treatment, in a state of containing contents. When the packaging bag is opened, all layers of the laminate are broken, but the sealant layer, which is typically an unstretched film, elongates easily, and excessive elongation of the sealant layer after heat treatment makes the laminate difficult to tear and consequently makes the packaging bag difficult to open. Thus, as the sealant layer constituting the laminate, it is preferred to use one having a low thermal shrinkage ratio.

However, even in a laminate including a sealant layer having a low thermal shrinkage ratio, when a substrate having a high thermal shrinkage ratio is disposed near the sealant layer, the substrate thermally shrinks after heat treatment. Thus, a gap is likely to be formed between the substrate after the heat treatment and the adhesive layer located between the substrate and the sealant layer, so that the force to tear the laminate when the laminate is torn by hand is dispersed and is less likely to be unidirectionally applied, making the entire laminate difficult to tear (poor hand tearability). Thus, it is preferred to use a substrate having a low thermal shrinkage ratio as the substrate located near the sealant layer.

Furthermore, when the adhesive layer located between the sealant layer having a low thermal shrinkage ratio and the substrate is soft, the force to tear the laminate may be dispersed, making the tearing difficult. Thus, the adhesive layer closest to the sealant layer preferably has a high modulus of elasticity. Increasing the modulus of elasticity of the adhesive layer closest to the sealant layer can suppress the elongation of the sealant layer when the laminate is torn by hand and can improve the hand tearability.

Furthermore, the thickness of the adhesive layer located between the sealant layer and the substrate is preferably within a predetermined range. Here, if the adhesive layer is thin, when the substrate or the sealant layer undergoes thermal shrinkage, a gap is likely to be formed due to slippage at the interface between the substrate and the adhesive layer or at the interface between the sealant layer and the adhesive layer, resulting in poor hand tearability. On the other hand, when the adhesive layer is thick, more energy is required to tear the laminate by hand, resulting in poor hand tearability.

A laminate according to the present disclosure includes a sealant layer with a thermal shrinkage ratio of 0% or more and 0.5% or less, a substrate with a thermal shrinkage ratio of less than 2%, and an adhesive layer with a modulus of elasticity of 15.0 MPa or more and a thickness of 0.8 $\mu$m or more and 4.5 $\mu$m or less, and the sealant layer and the substrate are disposed adjacent to each other via the adhesive layer. Thus, the sealant layer is easily torn by using a sealant layer having a low thermal shrinkage ratio as the sealant layer that elongates easily at the time of tearing, disposing a substrate having a low thermal shrinkage ratio near the sealant layer, and using a hard adhesive layer with a predetermined thickness as the adhesive layer located between the sealant layer and the substrate. Thus, when a laminate according to the present disclosure is used for a packaging bag, such as a heat-sterilized pouch, the laminate has heat resistance to withstand a treatment at a high temperature, such as a heat sterilization treatment, and has good hand tearability (that is, openability) after the heat sterilization treatment.

Furthermore, in a laminate according to the present disclosure with a three-layer structure including two substrates, when the relationship between the thermal shrinkage ratio of a first substrate far from a sealant layer and the thermal shrinkage ratio of a second substrate close to the sealant layer is such that the difference between the thermal shrinkage ratio of the first substrate and the thermal shrinkage ratio of the second substrate is 0.5 or more, a gap is likely to be formed between the first substrate after heat treatment and an adhesive layer located between the substrate and the second substrate after the heat treatment, and between the second substrate after the heat treatment and the adhesive layer located between the substrate and the sealant layer, so that the force to tear the laminate when the laminate is torn by hand is dispersed and is less likely to be unidirectionally applied, making the entire laminate difficult to tear (poor hand tearability). Thus, when a laminate according to the present disclosure is used for a packaging bag, such as a heat-sterilized pouch, the laminate has heat resistance to withstand a treatment at a high temperature, such as a heat sterilization treatment, and has good hand tearability (that is, openability) after the heat sterilization treatment.

The present disclosure relates to, for example, the following [1] to [13].

[1] A laminate including:

a second substrate; a second adhesive layer; and a sealant layer in this order in a thickness direction,

wherein the laminate includes only one substrate,

the second substrate is a polypropylene stretched substrate,

the sealant layer is an unstretched polypropylene film,

the second substrate has a thermal shrinkage ratio of less than 2% after heating at 120°C for 15 minutes,

the sealant layer has a thermal shrinkage ratio of 0% or more and 0.5% or less after heating at 120°C for 15 minutes, and

the second adhesive layer has a modulus of elasticity of 15.0 MPa or more and a thickness of 0.5 $\mu$m or more and 10.0 $\mu$m or less.

[2] A laminate including:

a first substrate, a first adhesive layer, a second substrate, a second adhesive layer, and a sealant layer in this order in a thickness direction,

wherein the first substrate is a polypropylene stretched substrate,

the second substrate is a polypropylene stretched substrate,

the sealant layer is an unstretched polypropylene film,

the second substrate has a thermal shrinkage ratio of less than 2% after heating at 120°C for 15 minutes,

the sealant layer has a thermal shrinkage ratio of 0% or more and 0.5% or less after heating at 120°C for 15 minutes, and

the second adhesive layer has a modulus of elasticity of 15.0 MPa or more and a thickness of 0.8 $\mu$m or more and 4.5 $\mu$m or less.

[3] A laminate including:

a first substrate; a first adhesive layer; a second substrate; a second adhesive layer; and a sealant layer in this order in a thickness direction,

wherein the first substrate is a polypropylene stretched substrate,

the second substrate is a polypropylene stretched substrate,

the sealant layer is an unstretched polypropylene film,

a difference between a thermal shrinkage ratio of the second substrate after heating at 120°C for 15 minutes and a thermal shrinkage ratio of the first substrate after heating at 120°C for 15 minutes is 0.5% or more,

the sealant layer has a thermal shrinkage ratio of 0% or more and 0.5% or less after heating at 120°C for 15 minutes, and

the second adhesive layer has a modulus of elasticity of 15.0 MPa or more and a thickness of 0.5 $\mu$m or more and 10.0 $\mu$m or less.

[4] The laminate according to any one of [1] to [3], wherein the sealant layer has a thermal shrinkage ratio of 0% or more and 0.3% or less after heating at 120°C for 15 minutes.

[5] The laminate according to any one of [1] to [3], wherein the sealant layer has a main melting peak temperature of 140°C or more as measured in accordance with JIS K 7121: 2012.

[6] The laminate according to any one of [1] to [3], wherein the sealant layer has a composite modulus of elasticity of 900 MPa or less.

[7] The laminate according to any one of [1] to [3], wherein the second adhesive layer has a thickness of 1.35 $\mu$m or more and 3.15 $\mu$m or less.

[8] The laminate according to any one of [1] to [3], wherein the laminate includes a barrier layer.

[9] The laminate according to any one of [1] to [3], wherein a polypropylene content relative to a total resin material content of the laminate is 80% by mass or more.

[10] The laminate according to any one of [1] to [3], which is a packaging material.

[11] A packaging bag including the laminate according to any one of [1] to [3].

[12] The packaging bag according to [11], which is a pouch for storing a heat-sterilized food.

[13] A heat-sterilized pouch including:

the packaging bag according to [12]; and

a heat-sterilized food stored in the packaging bag.

An embodiment of the present disclosure relates to, for example, the following [1A] to [13A].

[1A] A laminate including: a substrate; an adhesive layer; and a sealant layer in this order in a thickness direction,

wherein the substrate includes a stretched substrate containing polypropylene as a main component,

the sealant layer contains polypropylene as a main component,

the substrate has a thermal shrinkage ratio of less than 2% after heating at 120°C for 15 minutes,

the sealant layer has a thermal shrinkage ratio of 0% or more and 0.5% or less after heating at 120°C for 15 minutes, and

the product of the modulus of elasticity MPa and the thickness $\mu$m of the adhesive layer is 40 or more.

[2A] The laminate according to [1A], wherein the sealant layer has a thermal shrinkage ratio of 0% or more and 0.3% or less after heating at 120°C for 15 minutes.

[3A] The laminate according to [1A] or [2A], wherein the sealant layer has a main melting peak temperature of 140°C or more as measured in accordance with JIS K 7121: 2012.

[4A] The laminate according to any one of [1A] to [3A], wherein the sealant layer has a composite modulus of elasticity of 900 (MPa) or less.

[5A] The laminate according to any one of [1A] to [4A], wherein the product of the modulus of elasticity MPa and the thickness μm of the adhesive layer is 60 or less.

[6A] The laminate according to any one of [1A] to [5A], wherein

the laminate includes a first substrate, a second substrate, the adhesive layer, and the sealant layer in this order in a thickness direction,

the first substrate includes a stretched substrate containing polypropylene as a main component,

the second substrate includes a stretched substrate containing polypropylene as a main component, and

the second substrate has a thermal shrinkage ratio of less than 2% after heating at 120°C for 15 minutes.

[7A] The laminate according to [6A], wherein the first substrate is a barrier substrate including a stretched substrate containing polypropylene as a main component and an inorganic oxide layer.

[8A] The laminate according to [7A], wherein the barrier substrate further includes a covering layer on a surface of the inorganic oxide layer opposite a surface facing the stretched substrate.

[9A] The laminate according to any one of [6A] to [8A], including

a first adhesive layer located between the first substrate and the second substrate, and

a second adhesive layer located between the second substrate and the sealant layer,

wherein the product of the modulus of elasticity MPa and the thickness μm of the second adhesive layer is 40 or more.

[10A] The laminate according to any one of [1A] to [9A], wherein the polypropylene content relative to the total resin material content of the laminate is 80% by mass or more.

[11A] The laminate according to [10A], which is a packaging material.

[12A] A packaging bag including the laminate according to [11A].

[13A] The packaging bag according to [12A], which is a pouch subjected to retort treatment or boiling treatment.

EXAMPLES

A laminate and a packaging bag according to the present disclosure will be more specifically described below based on specific examples.

[Polypropylene Stretched Substrate]

The following were used as polypropylene stretched substrates (hereinafter referred to as "OPPs").

- OPP1 (P2271, manufactured by Toyobo Co., Ltd.)

  Thickness: 20 μm

  Stretch ratio: 4.5 (MD direction), 8.2 (TD direction)

  Thermal shrinkage ratio: 1.34% (MD direction), -0.60% (TD direction)

- OPP2 (ME-1, manufactured by Mitsui Chemicals Tohcello, Inc.)

  Thickness: 20 $\mu$m

  Stretch ratio: 4.5 (MD direction), 8.0 (TD direction)

  Thermal shrinkage ratio: 2.00% (MD direction), 1.61% (TD direction)

[Transparent Barrier Substrate]

One produced by the following procedure under the following conditions was used as a transparent barrier substrate.

(Production Procedure)

An acrylic resin with a hydroxy group (number-average molecular weight: 25,000, glass transition temperature: 99°C, hydroxyl value: 80 mg KOH/g) was diluted with a mixed solvent of methyl ethyl ketone and ethyl acetate (mixing ratio: 1:1) to a solid concentration of 10% by mass to prepare a main agent. An ethyl acetate solution containing tolylene diisocyanate (solid content: 75% by mass) was added to the main agent as a curing agent to prepare a solution for forming a surface coating layer. The amount of the curing agent used was 10 parts by mass per 100 parts by mass of the main agent.

A biaxially stretched polypropylene film with a corona-treated surface and with a thickness of 20 $\mu$m (ME-1 manufactured by Mitsui Chemicals Tohcello, Inc.) was prepared. The solution for forming a surface coating layer was applied to the corona-treated surface of the film and was dried to form a surface coating layer with a thickness of 0.5 $\mu$m. Thus, a resin substrate was produced.

A carbon-containing silicon oxide (silica) deposited film with a thickness of 12 nm was formed on the surface coating layer of the resin substrate using a low-temperature plasma chemical vapor deposition apparatus as a real apparatus (a CVD method) while applying tension to the resin substrate by roll-to-roll. The conditions for forming the deposited film were as described below.

(Formation Conditions)

- Hexamethyldisiloxane:oxygen gas:helium = 1:10:10 (unit: slm)

- Electricity supplied to cooling/electrode drum: 22 kW

- Line speed: 100 m/min

The carbon content C, the silicon content Si, and the oxygen content O of a carbon-containing silicon oxide deposited film were measured. The carbon content C, the silicon content Si, and the oxygen content O were 32.7%, 29.8%, and 37.5%, respectively, relative to the total (100%) of the three elements of silicon, oxygen, and carbon. These element contents were measured by X-ray photoelectron spectroscopy (XPS) using narrow scan analysis under the above-described measurement conditions.

385 g of water, 67 g of isopropyl alcohol, and 9.1 g of 0.5 N hydrochloric acid were mixed to prepare a solution with a pH of 2.2. This solution was mixed with 175 g of tetraethoxysilane as a metal alkoxide and 9.2 g of glycidoxypropyltrimethoxysilane as a silane coupling agent while cooling to 10°C to prepare a solution A. 14.7 g of poly(vinyl alcohol) having a degree of saponification of 99% or more and a degree of polymerization of 2400 as a water-soluble polymer, 324 g of water, and 17 g of isopropyl alcohol were mixed to prepare a solution B. The solution A and the solution B were mixed at 6.5:3.5 based on mass (solution A:solution B) to prepare a barrier coating agent. The barrier coating agent was applied by a spin coating method to the deposited film formed on the resin substrate and was heat-treated in an oven at 80°C for 60 seconds to form a barrier coating layer with a thickness of 300 nm.

A transparent barrier substrate thus produced included a biaxially stretched polypropylene film with a thickness of 20 $\mu$m, a surface coating layer with a thickness of 0.5 $\mu$m, a carbon-containing silicon oxide (silica) deposited film with a thickness of 12 nm, and a barrier coating layer with a thickness of 300 nm in this order. The thermal shrinkage ratio of the transparent barrier substrate in the flow direction (MD direction) was 2.44%.

[Adhesive Agent]

A two-component adhesive composed of the following main agent and curing agent was used.

- Adhesive agent A

    Main agent: polyester

    Curing agent: HDI + XDI

    Mole ratio of main agent to curing agent (NCO/OH): 2

    The adhesive agent A contains substantially no solvent.

- Adhesive agent B

    Main agent: polyester polyurethane polymer (Mw: 30,000)

    Curing agent: a mixture of an isophorone diisocyanate (IPDI) trimer and a trimethylolpropane (TMP) adduct of xylylene diisocyanate (XDI)

    Mole ratio of main agent to curing agent (NCO/OH): 4

    The adhesive agent B contains a solvent.

- Adhesive agent C

    Main agent: polyester

    Curing agent: IPDI + HDI

    Mole ratio of main agent to curing agent (NCO/OH): 2

    The adhesive agent C contains substantially no solvent.

- Adhesive agent D

    Main agent: polyester polyurethane

    Curing agent: XDI + IPDI

    Molecular weight: Mw 27000

    The adhesive agent D contains a solvent.

[Unstretched Polypropylene Substrate]

The following were used as unstretched polypropylene substrates (hereinafter referred to as "CPPs").

- CPP1

    Thickness: 60 $\mu$m

    Structure (three-layer structure)

        First layer (sealing layer): 5 $\mu$m

        Second layer (core layer): 50 $\mu$m

Third layer (surface layer): 5 μm

Melting peak temperature: 120.1°C, 149.0°C, 159.8°C

Main melting peak temperature: 159.8°C

Thermal shrinkage ratio: 0.36% (MD direction), 0.60% (TD direction)

- CPP2

Thickness: 60 μm

Structure: (monolayer structure)

Melting peak temperature: 116.5°C, 159.3°C, 163.3°C

Main melting peak temperature: 163.3°C

Thermal shrinkage ratio: 0.11% (MD direction), 0.09% (TD direction)

- CPP3

Thickness: 60 μm

Structure: (monolayer structure)

Melting peak temperature: 116.0°C, 163.4°C

Main melting peak temperature: 163.4°C

Thermal shrinkage ratio: 0.15% (MD direction), 0.10% (TD direction)

- CPP4

Thickness: 60 μm

Structure: (monolayer structure)

Melting peak temperature: 163.6°C

Main melting peak temperature: 163.6°C

Thermal shrinkage ratio: 0.14% (MD direction), 0.09% (TD direction)

- CPPS

Thickness: 60 μm

Structure: (two-layer structure)

First layer (sealing layer): 10 μm

Second layer (core layer): 50 μm

Melting peak temperature: 138°C

Main melting peak temperature: 138°C

Thermal shrinkage ratio: 1.50% (MD direction), 0.60% (TD direction)

[Example 1]

The transparent barrier substrate described above was prepared as a first substrate. The OPP1 with a corona-treated surface was prepared as a second substrate. The CPP1 with a corona-treated surface was prepared as a sealant layer.

A print layer with a coating thickness of 1 $\mu$m (dry) was formed by a gravure roll coating method on the surface of the barrier coating layer of the transparent barrier substrate serving as the first substrate. The adhesive agent A was applied to the print layer by the gravure roll coating method, and an adhesive layer surface formed on the first substrate and the corona-treated surface of the OPP1 serving as the second substrate were bonded together and were aged at 40°C for 72 hours. Furthermore, a non-corona-treated surface of the OPP1 was subjected to a corona treatment, the adhesive agent A was applied by the gravure roll coating method, and an adhesive layer surface formed on the OPP1 and the corona-treated surface of the CPP1 were bonded together and were aged at 40°C for 72 hours. Each adhesive layer formed had a thickness of 1.35 $\mu$m.

Thus, a laminate with a three-layer structure was produced. The laminate has a layer configuration of transparent barrier substrate (21 $\mu$m)/print layer (1 $\mu$m)/adhesive layer (1.35 $\mu$m)/OPP film (20 $\mu$m)/adhesive layer (1.35 $\mu$m)/CPP film (60 $\mu$m). Each value in parentheses indicates the thickness of the corresponding layer.

[Example 2]

A laminate was produced in the same manner as in Example 1 except that the type of adhesive agent and the thickness of the second adhesive layer were changed as shown in Table 1. The thickness of the first adhesive layer was changed in the same manner as the thickness of the second adhesive layer.

[Example 3]

A laminate was produced in the same manner as in Example 1 except that the CPP2 was used as a sealant layer.

[Example 4]

A laminate was produced in the same manner as in Example 1 except that the CPP3 was used as a sealant layer.

[Example 5]

A laminate was produced in the same manner as in Example 3 except that the OPP1 was used as the first substrate.

[Example 6]

A laminate was produced in the same manner as in Example 3 except that the type of adhesive agent was changed as shown in Table 1.

[Example 7]

A laminate was produced in the same manner as in Example 2 except that the CPP4 was used as a sealant layer.

[Example 8]

A laminate was produced in the same manner as in Example 1 except that the thickness of the second adhesive layer was changed as shown in Table 1. The thickness of the first adhesive layer was changed in the same manner as the thickness of the second adhesive layer.

[Example 9]

A laminate was produced in the same manner as in Example 2 except that the thickness of the second adhesive layer was changed as shown in Table 1. The thickness of the first adhesive layer was changed in the same manner as the thickness of the second adhesive layer.

[Comparative Example 1]

An OPP1 with a corona-treated surface was prepared as a first substrate. The transparent barrier substrate described above was prepared as a second substrate. A CPP1 with a corona-treated surface was prepared as a sealant layer.

A print layer with a coating thickness of 1 μm (dry) was formed by the gravure roll coating method on the corona-treated surface of the OPP1 film serving as the first substrate. The adhesive agent B was applied to the print layer by the gravure roll coating method, and an adhesive layer surface formed on the first substrate and the barrier coating layer surface of the transparent barrier substrate were bonded together and were aged at 40°C for 72 hours. Furthermore, a non-barrier coating layer surface of the transparent barrier substrate was subjected to a corona treatment, the adhesive agent B was applied by the gravure roll coating method, and an adhesive layer surface formed on the transparent barrier substrate and the corona-treated surface of the CPP1 film were bonded together and were aged at 40°C for 72 hours. Each adhesive layer formed had a thickness of 3.15 μm.

Thus, a laminate with a three-layer structure was produced. The laminate has a layer configuration of OPP film (20 μm)/print layer (1 μm)/adhesive layer (3.6 μm)/transparent barrier substrate (21 μm)/adhesive layer (3.15 μm)/CPP film (60 μm). Each value in parentheses indicates the thickness of the corresponding layer.

[Comparative Example 2]

A laminate was produced in the same manner as in Comparative Example 1 except that the type of adhesive agent and the thickness of the second adhesive layer were changed as shown in Table 1. The thickness of the first adhesive layer was changed in the same manner as the thickness of the second adhesive layer.

[Comparative Example 3]

A laminate was produced in the same manner as in Example 2 except that the OPP2 was used as the second substrate.

[Comparative Example 4]

A laminate was produced in the same manner as in Example 3 except that the type of adhesive agent and the thickness of the second adhesive layer were changed as shown in Table 1. The thickness of the first adhesive layer was changed in the same manner as the thickness of the second adhesive layer.

[Comparative Example 5]

A laminate was produced in the same manner as in Example 1 except that the CPP5 was used as a sealant layer.

[Example 10]

An OPP1 with a corona-treated surface was prepared as a substrate. A CPP1 with a corona-treated surface was prepared as a sealant layer.

A print layer with a coating thickness of 1 μm (dry) was formed by the gravure roll coating method on the corona-treated surface of the OPP1 film serving as a substrate. The adhesive agent A was applied to the print layer by the gravure roll coating method, and an adhesive layer surface formed on the substrate and the corona-treated surface of the CPP1 film were bonded together and were aged at 40°C for 72 hours. The adhesive layer formed had a thickness of 1.35 μm.

Thus, a laminate with a two-layer structure was produced. The laminate had a layer configuration of OPP film (20 μm)/print layer (1 μm)/adhesive layer (1.35 μm)/CPP film (60 μm). Each value in parentheses indicates the thickness of the corresponding layer.

[Example 11]

A laminate was produced in the same manner as in Example 10 except that the type of adhesive agent and the thickness of the adhesive layer were changed as shown in Table 2.

[Example 12]

A laminate was produced in the same manner as in Example 10 except that the CPP2 was used as a sealant layer.

[Example 13]

A laminate was produced in the same manner as in Example 10 except that the CPP3 was used as a sealant layer.

[Example 14]

A laminate was produced in the same manner as in Example 12 except that the type of adhesive agent was changed as shown in Table 2.

[Example 15]

A laminate was produced in the same manner as in Example 11 except that the CPP4 was used as a sealant layer.

[Comparative Example 6]

The transparent barrier substrate described above was prepared as a substrate. The CPP1 with a corona-treated surface was prepared as a sealant layer.
A print layer with a coating thickness of 1 $\mu$m (dry) was formed by the gravure roll coating method on the barrier coating layer surface of the transparent barrier substrate serving as a substrate. The adhesive agent B was applied to the print layer by the gravure roll coating method, and an adhesive layer surface formed on the transparent barrier substrate and the corona-treated surface of the CPP1 were bonded together and were aged at 40°C for 72 hours. Each adhesive layer formed had a thickness of 3.15 $\mu$m.
Thus, a laminate with a two-layer structure was produced. The laminate had a layer configuration of transparent barrier substrate (21 $\mu$m)/print layer (1 $\mu$m)/adhesive layer (3.15 $\mu$m)/PP film (60 $\mu$m). Each value in parentheses indicates the thickness of the corresponding layer.

[Comparative Example 7]

A laminate was produced in the same manner as in Comparative Example 6 except that the type of adhesive agent and the thickness of the adhesive layer were changed as shown in Table 2.

[Comparative Example 8]

A laminate was produced in the same manner as in Example 10 except that the type of adhesive agent and the thickness of the adhesive layer were changed as shown in Table 2.

[Comparative Example 9]

A laminate was produced in the same manner as in Example 8 except that the CPP5 was used as a sealant layer.

[Measurement of Modulus of elasticity]

(Modulus of Elasticity of Adhesive Layer)

For the laminates produced in the above examples, force curve measurement was performed with an atomic force microscope (AFM) to determine the modulus of elasticity of a cross section of the adhesive layer from the resulting force curve.
A specific measurement procedure is as described below.
Bag-like pouches were produced by folding the laminates produced in the above examples into a V shape with the sealant film side on the inside and heat-sealing the laminates to a width of 130 mm and a height of 165 mm. Each pouch was filled with 100 mL of water from the opening, and the opening was hermetically heat-sealed. The sealed pouch was subjected to a retort sterilization treatment of a hot water type at a retort temperature of 121°C for a retort time of 30 minutes.
A block in which the laminate after the retort sterilization treatment was embedded in an embedding resin was prepared and was cut with a commercially available rotary microtome in a room temperature (25°C) environment to prepare a cross section of the laminate. The cross section is prepared by cutting in the thickness direction perpendicular to the main surface of the laminate. Finishing was performed with a diamond knife.
Using an atomic force microscope (AFM), mapping measurement was performed on a 2.5-$\mu$m square including a

cross section of the adhesive layer with respect to the cross section. In the cross section of the adhesive layer, 20 force curves with which an appropriate force curve shape was obtained were selected. The modulus of elasticity was calculated by fitting each force curve according to the Johnson-Kendall-Roberts (JKR) theory to calculate the arithmetic mean of 20 elastic moduli (hereinafter also referred to as a "first arithmetic mean"). The force curve was selected near the central portion of the adhesive layer in the thickness direction in a portion where the cross section of the adhesive layer was exposed. Three elastic moduli close to the first arithmetic mean were selected from the 20 elastic moduli to calculate the arithmetic mean of the three elastic moduli (hereinafter also referred to as a "second arithmetic mean"). The second arithmetic mean was defined as the modulus of elasticity of the cross section of the adhesive layer.

Details of the measurement conditions for the AFM are described below.

(Measurement of Modulus of Elasticity using AFM)

- Apparatus name: SPM-9700HT (manufactured by Shimadzu Corporation)

- Measurement atmosphere: in the atmosphere, at room temperature (25°C)

- Measurement mode: contact mode

- Calibration method: measuring cantilever sensitivity using glass

- Number of measurement points: 64 x 64 points (4096 points in total)

- Viewing angle range: 2.5-$\mu$m square

- Cantilever type: CONTR (manufactured by NanoWorld)

- Tip radius of cantilever: < 8 nm

- Spring constant of cantilever: 0.2 N/m

- Contact pressure: 0.5 V

- Scanning speed: 3 Hz

- Elastic modulus calculation model: Johnson-Kendall-Roberts (JKR) theory

- Poisson's ratio of sample: 0.4

- Analysis software: Nano 3D Mapping (manufactured by Shimadzu Corporation)

(Composite Modulus of Elasticity of Sealant Layer)

The composite modulus of elasticity ($E_r$) of the sealant layer was determined based on the nanoindentation method using a nanoindenter ("TI950 TriboIndenter" manufactured by Bruker AXS K.K.) using a cross section of the sealant layer as a measured surface. A Berkovich indenter (triangular pyramid indenter; Berkovich_TI0039) was used as an indenter of the nanoindenter in the measurement. The measurement was performed at five or more locations (five points) on the same cross section, and the composite modulus of elasticity $E_r$ was defined as the arithmetic mean of the values at five locations (five points) measured with good reproducibility.

The cross section is obtained by folding a laminate thus produced into a V shape with the sealant film facing inward, heat sealing the folded laminate so as to have a width of 130 mm and a height of 165 mm to produce a bag-like pouch, filling the pouch with 100 mL of water from an opening, heat-sealing the opening to seal the pouch, and cutting the pouch in the thickness direction of the laminate after a retort sterilization treatment of a hot water type at a retort temperature of 121°C for a retort time of 30 minutes. The cross section can be prepared by preparing a block in which the laminate was embedded in an embedding resin and cutting the block with a commercially available rotary microtome in a room temperature (23°C) environment. Finishing was performed with a diamond knife.

The indenter was pressed into an exposed cross section of the sealant layer at three positions in the thickness direction of the sealant layer: a position 2 $\mu$m inside from the interface with the adhesive layer, a position near the central portion, and a position 2 $\mu$m inside from the sealing surface.

A load control method (indentation load: 30 $\mu$N, loading for 3 seconds/holding for 5 seconds/unloading for 3 seconds) was adopted as the measurement conditions, and the measurement conditions are more specifically as described below. The indenter was pressed into the sealant layer from the cross section of the sealant layer to an indentation load of 30 $\mu$N over 3 seconds, and this state was held for 5 seconds. This was followed by unloading for 3 seconds. Thus, the maximum load $P_{max}$, the projected contact area $A_p$ at the maximum depth, and a load-displacement curve could be obtained, and the composite modulus of elasticity was calculated from the load-displacement curve. The measurement was performed in a room temperature (23°C) environment.

[Laminate Strength]

Bag-like pouches were produced by folding the laminates produced in the above examples into a V-shape with the sealant film side on the inside and heat-sealing the laminates to a width of 130 mm and a height of 165 mm. Each pouch was filled with 100 mL of water from the opening, and the opening was hermetically heat-sealed. The sealed pouch was subjected to a retort sterilization treatment of a hot water type at a retort temperature of 121°C for a retort time of 30 minutes.

The laminate after the retort sterilization treatment was cut into a strip with a width of 15 mm extending in the MD direction of the film to prepare a test specimen. After the test specimen was held at a temperature of 100°C and a relative humidity of 50% for 1 minute, the laminate strength (N/15 mm) of the test specimen was measured with a tensile tester (Tensilon universal testing machine, manufactured by Orientec Co., Ltd.) in accordance with JIS Z 1707: 2019 at a temperature of 100°C and a relative humidity of 50% and at a peel rate of 50 mm/min by 180-degree peeling (a T-peel method).

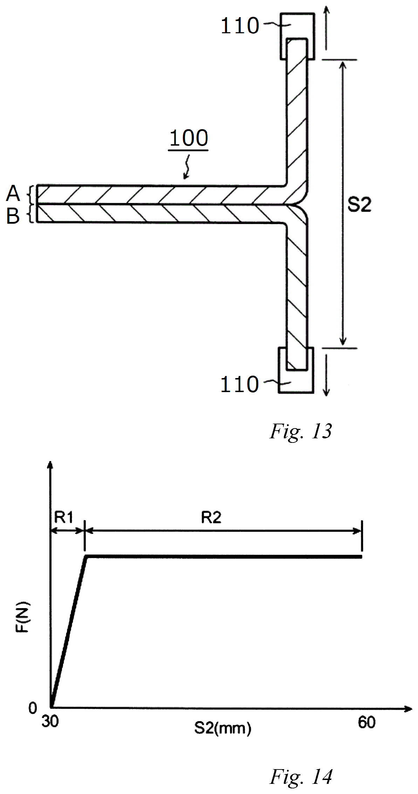

More specifically, first, the laminate was cut out to prepare a strip-like test specimen 100 in which the sealant layer side B and the substrate side A were peeled by 15 mm in advance in the longitudinal direction. Subsequently, as illustrated in Fig. 13, the peeled portions of the sealant layer side B and the substrate side A were each gripped by a clamp 110 of the measuring apparatus. The clamps 110 were pulled at a rate of 50 mm/min in opposite directions perpendicular to the plane direction of the portion where the sealant layer side B and the substrate side A were still laminated, thereby measuring the average value of the tensile stress F in the stable region (see Fig. 14). The distance S2 between the clamps 110 at the start of the pulling was 30 mm, and the distance S2 between the clamps 110 at the end of the pulling was 60 mm. Fig. 14 is a schematic view showing a change in the tensile stress F with respect to the distance S2 between the clamps 110. As illustrated in Fig. 14, the change in the tensile stress F with respect to the distance S2 enters a second region $R^2$ with a smaller change rate than a first region $R^1$ via the first region $R^1$. The second region $R^2$ is also referred to as a stable region. For five test specimens 100, the average value of the tensile stress F in the stable region $R^2$ was measured and was defined as the laminate strength.

[Evaluation of Openability]

Trouser tear strength was determined in accordance with JIS K 7128-1 (1998). More specifically, bag-like pouches were produced by folding the laminates produced in the above examples into a V-shape with the sealant film side on the inside and heat-sealing the laminates to a width of 130 mm and a height of 165 mm. Each pouch was filled with 100 mL of water from the opening, and the opening was hermetically heat-sealed. The sealed pouch was subjected to a retort sterilization treatment of a hot water type at a retort temperature of 121°C for a retort time of 30 minutes.

The laminate after the retort sterilization treatment was cut into a size of 100 mm x 50 mm and was allowed to stand in an atmosphere with a temperature of 23°C and a relative humidity of 50% for 1 hour or more to prepare a test specimen, and the test specimen was tested using a tensile tester (Strograph VG1F) at a test speed of 200 mm/min, and the tear force of 25 mm excluding 20 mm at the start of tearing and 5 mm before the end of tearing was calculated and averaged for 10 samples. The openability of the laminate was evaluated from the measurement results. Tables 1 and 2 show the results.

<Evaluation Criteria>

A: Less than 2 N

B: 2 N or more and less than 3 N

C: 3 N or more and less than 10 N

D: 10 N or more

[Evaluation of Hand Tearability]

For each laminate produced above, two rectangular sheets with a width of 120 mm and a height of 160 mm were prepared and stacked such that the sealant film was on the inside, and two long sides and one short side were sealed such that the seal width was 5 mm to produce a bag-like pouch. The pouch was filled with 100 mL of water from the opening, and the opening was hermetically heat-sealed so that the seal width was 10 mm. The sealed pouch was subjected to a retort sterilization treatment of a hot water type at a retort temperature of 120°C for a retort time of 30 minutes.

The pouch after the retort sterilization was cut by 2 mm at a position of 20 mm from an end portion of the short side heat-sealed at a seal width of 10 mm, was opened by hand from that position, and was subjected to sensory evaluation according to the following evaluation criteria. Tables 1 and 2 show the results.

<Evaluation Criteria>

A: Opening was possible without any problem both at the start of opening and after the start of opening.

B: Although slight catching was felt at the start of opening, opening was possible without any problem after the start of opening.

C: A catch was felt at the start of opening, opening was possible from end to end even after the start of opening, but it was heavy and difficult to open.

D: It felt heavy and difficult to open at the start of opening, and the film elongated even after the start of opening, causing opening to stop midway and preventing complete opening.

[Evaluation of Heat Resistance]

Each laminate produced above was folded into a V shape so that the surface (first layer) on the sealant film side was on the inside, and was heat-sealed so as to have a width of 130 mm and a height of 165 mm to produce a bag-like pouch. The pouch was filled with 100 mL of water from the opening, and the opening was hermetically heat-sealed. The sealed pouch was subjected to a retort sterilization treatment of a hot water type at a retort temperature of 135°C for a retort time of 30 minutes, and the heat resistance of the laminate was evaluated by examining the change in appearance and the presence or absence of inner surface temporary adhesion. Tables 1 and 2 show the results.

<Evaluation Criteria>

A: No change in appearance

B: Wrinkles due to thermal shrinkage are formed in the appearance, but there is no inner surface temporary adhesion

C: Wrinkles due to thermal shrinkage are formed in the appearance, and slight temporary adhesion is observed near a seal edge

D: Wrinkles and inner surface temporary adhesion occur, and the bag shape is not maintained

[Evaluation of Impact Resistance]

Each laminate produced above was folded into a V shape so that the surface (first layer) on the sealant film side was on the inside, and was heat-sealed so as to have a width of 130 mm and a height of 165 mm to produce 10 bag-like pouches. Each pouch was filled with 150 mL of water from the opening, and the opening was hermetically heat-sealed. The sealed pouch was dropped 10 times horizontally from the height of 80 cm (so that the trunk portion of the pouch hit the floor) and was then dropped 10 times vertically from the height of 80 cm (so that the bottom portion of the pouch hit the floor), and the impact resistance was evaluated by examining how many of the 10 pouches were broken. Tables 1 and 2 show the results.

<Evaluation Criteria>

S: No package rupture

A: Although there is no package rupture, retraction of the seal position is observed

B: Although the content does not leak, retraction of the seal position and floating near the seal edge are observed

C: Two or less packages are broken

D: Three or more packages are broken

[Table 1]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|
| First substrate | Type | Transparent barrier | Transparent barrier | Transparent barrier | Transparent barrier | OPP1 | Transparent barrier | Transparent barrier | Transparent barrier | Transparent barrier | OPP1 | OPP1 | Transparent barrier | Transparent barrier | Transparent barrier |
| Second substrate | Type | OPP1 | OPP1 | OPP1 | OPP1 | OPP1 | OPP1 | OPP1 | OPP1 | OPP1 | Transparent barrier | Transparent barrier | OPP2 | OPP1 | OPP1 |
| Second adhesive layer | Type | Adhesive A | Adhesive B | Adhesive A | Adhesive A | Adhesive A | Adhesive C | Adhesive B | Adhesive A | Adhesive B | Adhesive B | Adhesive A | Adhesive B | Adhesive D | Adhesive A |
| Sealant layer | Type | CPP1 | CPP1 | CPP2 | CPP3 | CPP2 | CPP2 | CPP4 | CPP1 | CPP1 | CPP1 | CPP1 | CPP1 | CPP2 | CPP5 |
| | Layer configuration | Three layers | Three layers | Single layer | Single layer | Single layer | Single layer | Single layer | Three layers | Three layers | Three layers | Three layers | Three layers | Single layer | Two layers |
| | Third layer (μm) | 5 | 5 | | | | | | 5 | 5 | 5 | 5 | 5 | | 50 |
| | Second layer (μm) | 50 | 50 | 60 | 60 | 60 | 60 | 60 | 50 | 50 | 50 | 50 | 50 | 60 | |
| | First layer (μm) | 5 | 5 | | | | | | 5 | 5 | 5 | 5 | 5 | | 10 |
| Thermal shrinkage ratio (MD direction) | First substrate (%) | 2.44 | 2.44 | 2.44 | 2.44 | 1.34 | 2.44 | 2.44 | 2.44 | 2.44 | 1.34 | 1.34 | 2.44 | 2.44 | 2.44 |
| | Second substrate (%) | 1.34 | 1.34 | 1.34 | 1.34 | 1.34 | 1.34 | 1.34 | 1.34 | 1.34 | 2.44 | 2.44 | 2.00 | 1.34 | 1.34 |
| | (First substrate - Second substrate) | 1.10 | 1.10 | 1.10 | 1.10 | 0.00 | 1.10 | 1.10 | 1.10 | 1.10 | -1.10 | -1.10 | 0.44 | 1.10 | 1.10 |
| | Sealant layer (%) | 0.36 | 0.36 | 0.11 | 0.15 | 0.11 | 0.11 | 0.14 | 0.36 | 0.36 | 0.36 | 0.36 | 0.36 | 0.11 | 1.50 |

(continued)

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|
| Adhesive agent | Modulus of elasticity (Mpa) | 35.3 | 20.0 | 35.3 | 35.3 | 35.3 | 66.5 | 20.0 | 45.3 | 20.0 | 20.0 | 35.3 | 20.0 | 14.4 | 35.3 |
| | Thickness (μm) | 1.35 | 3.15 | 1.35 | 1.35 | 1.35 | 1.35 | 3.15 | 0.8 | 4.5 | 3.15 | 1.35 | 3.15 | 2.43 | 1.35 |
| Composite modulus of elasticity of sealant layer (MPa) | Third layer (laminate surface side) | 1496.6 | 1496.6 | 691.1 | 815.3 | 691.1 | 691.1 | 902.2 | 1496.6 | 1496.6 | 1496.6 | 1496.6 | 1496.6 | 691.1 | 1236.8 |
| | Second layer (center) | 847.7 | 847.7 | 691.1 | 815.3 | 691.1 | 691.1 | 902.2 | 847.7 | 847.7 | 847.7 | 847.7 | 847.7 | 691.1 | 1236.8 |
| | First layer (seal surface side) | 1667.2 | 1667.2 | 691.1 | 815.3 | 691.1 | 691.1 | 902.2 | 1667.2 | 1667.2 | 1667.2 | 1667.2 | 1667.2 | 691.1 | 1755.4 |
| | Laminate strength (N/15mm) | 3.1 | 3.3 | 3.1 | 3.1 | 3.1 | 3.1 | 3.0 | 2.7 | 1.8 | 1.4 | 1.7 | 3.0 | 2.4 | 2.8 |
| | Trouser tear strength (N) | 1.55 | 1.33 | 1.42 | 1.46 | 0.83 | 0.95 | 1.17 | 1.41 | 2.36 | 17.70 | 19.10 | 3.28 | 4.81 | 6.68 |
| Evaluation | Openability | A | A | A | A | A | A | A | A | B | D | D | C | C | C |
| | Hand tearability | A | A | A | A | A | A | A | A | B | D | D | C | C | C |
| | Heat resistance | B | B | A | A | A | A | A | B | B | B | B | B | A | C |
| | Impact resistance | A | B | S | A | S | B | C | B | B | B | A | B | S | C |

[Table 2]

| | | Example 10 | Example 11 | Example 12 | Example 13 | Example 14 | Example 15 | Comparative Example 6 | Comparative Example 7 | Comparative Example 8 | Comparative Example 9 |
|---|---|---|---|---|---|---|---|---|---|---|---|
| Substrate | Type | OPP1 | OPP1 | OPP1 | OPP1 | OPP1 | OPP1 | Transparent barrier | Transparent barrier | OPP1 | OPP1 |
| Adhesive layer | Type | Adhesive A | Adhesive B | Adhesive A | Adhesive A | Adhesive C | Adhesive B | Adhesive B | Adhesive A | Adhesive D | Adhesive A |
| Sealant layer | Type | CPP1 | CPP1 | CPP2 | CPP3 | CPP2 | CPP4 | CPP1 | CPP1 | CPP2 | CPP5 |
| | Layer configuration | Three layers | Three layers | Single layer | Single layer | Single layer | Single layer | Three layers | Three layers | Single layer | Two layers |
| | Third layer ($\mu$m) | 5 | 5 | 60 | 60 | 60 | 60 | 5 | 5 | 60 | 50 |
| | Second layer ($\mu$m) | 50 | 50 | | | | | 50 | 50 | | |
| | First layer ($\mu$m) | 5 | 5 | | | | | 5 | 5 | | 10 |
| Thermal shrinkage ratio (MD direction) | Substrate (%) | 1.34 | 1.34 | 1.34 | 1.34 | 1.34 | 1.34 | 2.44 | 2.44 | 1.34 | 1.34 |
| | Sealant layer (%) | 0.36 | 0.36 | 0.11 | 0.15 | 0.11 | 0.14 | 0.36 | 0.36 | 0.11 | 1.50 |
| Adhesive agent | Modulus of elasticity (Mpa) | 35.3 | 20.0 | 35.3 | 35.3 | 66.5 | 20.0 | 20.0 | 35.3 | 14.4 | 35.3 |
| | Thickness ($\mu$m) | 1.35 | 3.15 | 1.35 | 1.35 | 1.35 | 3.15 | 3.15 | 1.35 | 2.43 | 1.35 |
| Composite modulus of elasticity of sealant layer (MPa) | Third layer (laminate surface side) | 1496.6 | 1496.6 | 691.1 | 815.3 | 691.1 | 902.2 | 1496.6 | 1496.6 | 691.1 | 1236.8 |
| | Second layer (center) | 847.7 | 847.7 | 691.1 | 815.3 | 691.1 | 902.2 | 847.7 | 847.7 | 691.1 | 1236.8 |
| | First layer (seal surface side) | 1667.2 | 1667.2 | 691.1 | 815.3 | 691.1 | 902.2 | 1667.2 | 1667.2 | 691.1 | 1755.4 |

(continued)

| | | Example 10 | Example 11 | Example 12 | Example 13 | Example 14 | Example 15 | Comparative Example 6 | Comparative Example 7 | Comparative Example 8 | Comparative Example 9 |
|---|---|---|---|---|---|---|---|---|---|---|---|
| Laminate strength (N/15mm) | | 3.1 | 3.3 | 3.1 | 3.1 | 3.1 | 3.0 | 2.8 | 2.6 | 2.4 | 2.8 |
| Trouser tear strength (N) | | 1.86 | 1.65 | 1.70 | 1.72 | 1.49 | 1.66 | 3.67 | 3.30 | 5.90 | 7.45 |
| Evaluation | Openability | A | A | A | A | A | A | C | C | C | C |
| | Hand tearability | A | A | A | A | A | A | C | C | C | C |
| | Heat resistance | B | B | A | A | A | A | B | B | A | C |
| | Impact resistance | A | B | S | A | B | C | B | A | S | C |

Reference Signs List

1: laminate, 10: polypropylene stretched substrate, 20: barrier substrate, 21: polypropylene layer, 22: polypropylene stretched substrate, 23: surface coating layer, 24: inorganic oxide layer, 25: covering layer, 26: surface resin layer, 30: sealant layer, 40, 40A, 40B: adhesive layer,

50: packaging bag, 51: easy-to-open portion, 52: notch portion, 53: half-cut line,

60: standing pouch, 61: trunk portion (side sheet), 62: bottom portion (bottom sheet), 63: venting mechanism, 63a: venting seal portion, 63b: unsealed portion,

100: test specimen, 110: clamp

## Claims

1. A laminate comprising:

   a second substrate; a second adhesive layer; and a sealant layer in this order in a thickness direction,
   wherein the laminate includes only one substrate,
   the second substrate is a polypropylene stretched substrate,
   the sealant layer is an unstretched polypropylene film,
   the second substrate has a thermal shrinkage ratio of less than 2% after heating at 120°C for 15 minutes,
   the sealant layer has a thermal shrinkage ratio of 0% or more and 0.5% or less after heating at 120°C for 15 minutes, and
   the second adhesive layer has a modulus of elasticity of 15.0 MPa or more and a thickness of 0.5 $\mu$m or more and 10.0 $\mu$m or less.

2. A laminate comprising:

   a first substrate; a first adhesive layer; a second substrate; a second adhesive layer; and a sealant layer in this order in a thickness direction,
   wherein the first substrate is a polypropylene stretched substrate,
   the second substrate is a polypropylene stretched substrate,
   the sealant layer is an unstretched polypropylene film,
   the second substrate has a thermal shrinkage ratio of less than 2% after heating at 120°C for 15 minutes,
   the sealant layer has a thermal shrinkage ratio of 0% or more and 0.5% or less after heating at 120°C for 15 minutes, and
   the second adhesive layer has a modulus of elasticity of 15.0 MPa or more and a thickness of 0.8 $\mu$m or more and 4.5 $\mu$m or less.

3. A laminate comprising:

   a first substrate; a first adhesive layer; a second substrate; a second adhesive layer; and a sealant layer in this order in a thickness direction,
   wherein the first substrate is a polypropylene stretched substrate,
   the second substrate is a polypropylene stretched substrate,
   the sealant layer is an unstretched polypropylene film,
   a difference between a thermal shrinkage ratio of the second substrate after heating at 120°C for 15 minutes and a thermal shrinkage ratio of the first substrate after heating at 120°C for 15 minutes is 0.5% or more,
   the sealant layer has a thermal shrinkage ratio of 0% or more and 0.5% or less after heating at 120°C for 15 minutes, and
   the second adhesive layer has a modulus of elasticity of 15.0 MPa or more and a thickness of 0.5 $\mu$m or more and 10.0 $\mu$m or less.

4. The laminate according to any one of claims 1 to 3, wherein the sealant layer has a thermal shrinkage ratio of 0% or more and 0.3% or less after heating at 120°C for 15 minutes.

5. The laminate according to any one of claims 1 to 3, wherein the sealant layer has a main melting peak temperature of 140°C or more as measured in accordance with JIS K 7121: 2012.

6. The laminate according to any one of claims 1 to 3, wherein the sealant layer has a composite modulus of elasticity of 900 MPa or less.

7. The laminate according to any one of claims 1 to 3, wherein the second adhesive layer has a thickness of 1.35 $\mu$m or more and 3.15 $\mu$m or less.

8. The laminate according to any one of claims 1 to 3, wherein the laminate includes a barrier layer.

9. The laminate according to any one of claims 1 to 3, wherein a polypropylene content relative to a total resin material content of the laminate is 80% by mass or more.

10. The laminate according to any one of claims 1 to 3, which is a packaging material.

11. A packaging bag comprising the laminate according to any one of claims 1 to 3.

12. The packaging bag according to claim 11, which is a pouch for storing a heat-sterilized food.

13. A heat-sterilized pouch comprising:

the packaging bag according to claim 12; and
a heat-sterilized food stored in the packaging bag.

*Fig. 1*

*Fig. 2*

*Fig. 3*

*Fig. 4*

*Fig. 5*

*Fig. 6*

*Fig. 7*

*Fig. 8*

*Fig. 7*

*Fig. 8*

Fig. 9

Fig. 10

*Fig. 11*

*Fig. 12*

*Fig. 13*

*Fig. 14*

# EP 4 778 721 A1

<table>
<tr><td colspan="2"><strong>INTERNATIONAL SEARCH REPORT</strong></td><td>International application No.<br><strong>PCT/JP2024/034526</strong></td></tr>
</table>

**A.    CLASSIFICATION OF SUBJECT MATTER**

*B32B 27/32*(2006.01)i; *B32B 27/00*(2006.01)i; *B65D 65/40*(2006.01)i
FI:    B32B27/32 E; B32B27/00 D; B32B27/00 H; B65D65/40 D

According to International Patent Classification (IPC) or to both national classification and IPC

**B.    FIELDS SEARCHED**

Minimum documentation searched (classification system followed by classification symbols)

B32B1/00-43/00;C09J1/00-201/10;B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2023-49299 A (TOPPAN PRINTING CO., LTD.) 10 April 2023 (2023-04-10) claims, examples 1, 4, 8, 11, 15, paragraph [0192] | 1-13 |
| A | WO 2023/013768 A1 (DAI NIPPON PRINTING CO., LTD.) 09 February 2023 (2023-02-09) claims, examples 1A, 1Aa, 2A, table 1 | 1-13 |
| A | JP 2017-226776 A (TOYOBO CO., LTD.) 28 December 2017 (2017-12-28) claims, tables 4, 5 | 1-13 |
| A | WO 2023/037917 A1 (TOYOBO CO., LTD.) 16 March 2023 (2023-03-16) claims, examples 1-3 | 1-13 |
| A | WO 2023/074473 A1 (TOYOBO CO., LTD.) 04 May 2023 (2023-05-04) claims, paragraph [0042], examples, table 1 | 1-13 |
| P, X | WO 2024/166956 A1 (DAI NIPPON PRINTING CO., LTD.) 15 August 2024 (2024-08-15) claims, examples | 1-4, 6-13 |
| P, A | KR 10-2615277 B1 (CJ CHEILJEDANG CORPORATION) 18 December 2023 (2023-12-18) | 1-13 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **28 November 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

51

# EP 4 778 721 A1

### INTERNATIONAL SEARCH REPORT
**Information on patent family members**

International application No.

**PCT/JP2024/034526**

| Patent document cited in search report | | | Publication date (day/month/year) | Patent family member(s) | | | Publication date (day/month/year) |
|---|---|---|---|---|---|---|---|
| JP | 2023-49299 | A | 10 April 2023 | (Family: none) | | | |
| WO | 2023/013768 | A1 | 09 February 2023 | EP | 4382293 | A1 | |
| JP | 2017-226776 | A | 28 December 2017 | (Family: none) | | | |
| WO | 2023/037917 | A1 | 16 March 2023 | EP | 4400308 | A1 | |
| | | | | claims, examples 1-3 | | | |
| | | | | CN | 117980140 | A | |
| | | | | KR | 10-2024-0064670 | A | |
| WO | 2023/074473 | A1 | 04 May 2023 | CN | 118265606 | A | |
| | | | | KR | 10-2024-0101935 | A | |
| WO | 2024/166956 | A1 | 15 August 2024 | JP | 7373682 | B1 | |
| KR | 10-2615277 | B1 | 18 December 2023 | WO | 2024/085393 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023166474 A
- JP 2023049299 A
- JP 6241039 B